# EUROPEAN PATENT SPECIFICATION

(11) **EP 4 192 108 B1**
(45) Date of publication and mention of the grant of the patent: **21.01.2026**
(21) Application number: 22202981.1
(22) Date of filing: 21.10.2022
(51) Int. Cl.: H04W 36/18, H04W 36/00, H04W 36/08

(54) **HANDOVER OF A USER EQUIPMENT (UE) INVOLVING MTRP (MULTIPLE TRANSMISSION AND RECEPTION POINT) OPERATION**
HANDOVER EINES BENUTZERGERÄTS (UE) MIT MTRP (MULTIPLE-SENDE-UND EMPFANGSPUNKT)-BETRIEB
TRANSFERT D'UNE OPÉRATION D'UN ÉQUIPEMENT UTILISATEUR (UE) IMPLIQUANT UNE MTRP (POINT D'ÉMISSION ET DE RÉCEPTION MULTIPLES)

(30) Priority: 02.12.2021 IN 202141055927
(43) Date of publication of application: 07.06.2023
(73) Proprietor: Nokia Technologies Oy, 02610 Espoo (FI)
(72) Inventor: CHANDRASHEKAR, Subramanya, Bangalore (IN); SPAPIS, Panagiotis, Munich (DE); AWADA, Ahmad, Munich (DE); GÜRSU, Halit Murat, Munich (DE); GUNDOGAN, Alperen, Munich (DE)
(74) Representative: Nokia EPO representatives

(56) References cited:
- ERICSSON: "3GPP TSG-RAN WG2 #113bis-e; R2-2102820; Reconfiguration during DAPS HO", vol. RAN WG2, no. Electronic meeting; 20210412 - 20210420, 1 April 2021 (2021-04-01), XP051991956, Retrieved from the Internet <URL:https://ftp.3gpp.org/tsg_ran/WG2_RL2/TSGR2_113bis-e/Docs/R2-2102820.zip R2-2102820 Reconfiguration during DAPS HO.docx> [retrieved on 20210401]
- QUALCOMM INCORPORATED: "3GPP TSG-RAN WG2 #112-e; R2-2009559; Handling of SCells and mTRP during DAPS HO", vol. RAN WG2, no. Electronic; 20201102 - 20201113, 23 October 2020 (2020-10-23), XP051942511, Retrieved from the Internet <URL:https://ftp.3gpp.org/tsg_ran/WG2_RL2/TSGR2_112-e/Docs/R2-2009559.zip R2-2009559_DAPS_SCell_mTRP.docx> [retrieved on 20201023]
- QUALCOMM INCORPORATED: "3GPP TSG-RAN WG2 #108; R2-1914516; Source connection handling during DAPS HO", vol. RAN WG2, no. Reno, USA; 20191118 - 20191122, 8 November 2019 (2019-11-08), XP051816583, Retrieved from the Internet <URL:https://ftp.3gpp.org/tsg_ran/WG2_RL2/TSGR2_108/Docs/R2-1914516.zip R2-1914516.docx> [retrieved on 20191108]
- LENOVO ET AL: "3GPP TSG-RAN Meeting #93-e; RP-212067; Mobility enhancement In Rel-18", vol. TSG RAN, no. Electronic Meeting; 20210913 - 20210917, 6 September 2021 (2021-09-06), XP052049355, Retrieved from the Internet <URL:https://ftp.3gpp.org/tsg_ran/TSG_RAN/TSGR_93e/Docs/RP-212067.zip RP-212067 Mobility enhancement in Rel-18 v1.0.docx> [retrieved on 20210906]

## Description

### FIELD

The following disclosure relates to the field of communication technology, in particular mobile communication technology. In particular, disclosure relates to a handover in a communication network, in particular a handover of a user equipment from a source network node to a target network node, wherein in particular the user equipment may be connected to more than one network node in a multiple transmission and reception point arrangement.

### BACKGROUND

In modern telecommunication networks, multiple transmission and reception points (mTRP) are used to improve reliability, coverage, capacity performance by enabling the user equipment (UE) to receive through more than one cell.

In one implementation, mTRP is limited to the case when the cells are from the same distributed unit (DU). In other implementations, mTRP may be extended to cover also the case when the cells are from different DUs, central units (CUs) and/or nodes.

When the cells are not from the same DU, the setup of an assisting TRP might be performed as follows: Specifically, based on user equipment (UE) measurement reports, the source node controlling a source cell identifies a potential assisting cell controlled by different DU and/or node and proceeds in sending a "TRP Addition Request" for an assisting cell. Upon receiving the response in "TRP Addition Request ACK message", it sends a Radio Resource Control (RRC) configuration to the UE with the respective configuration of the assisting cell (TRP). Then the UE proceeds in Random Access to the Assisting Cell and the latter activates the communication using a Medium Access Control Control Element (MAC CE).

The inter-network-node mTRP procedure can be made to operate with and without handover (HO) of the serving network node. The serving network node may be in the network node that is currently connected to the user equipment, for example a source network node providing a serving cell to the user equipment. A combination of the mTRP set up (at the target node) and the handover procedures may specifically be done by the source node initially setting up the mTRP operation (serving and assisting cells) as captured in the previous paragraph and then based on the measurement report it identifies handover target cell and sends a HO request and receives the corresponding response, respectively. Then, enforce the RRC reconfiguration (HO command) to the user equipment and informs the assisting node (controlling the assisting cell) about the release of the mTRP. Upon receiving the RRC Reconfiguration containing the handover command, the user equipment performs the HO (so-called baseline HO) and once it is finalized, it would provide the required measurements to the target node which in its turn will configure inter-network-node mTRP and at the same assisting cell that was configured by the source network node previously before the handover. In particular, the source network node may provide a serving cell to the user equipment in the mTRP operation before the handover.

This may involve a communication overhead. The target network node which in particular provides a serving cell to the user equipment after HO needs to select the assisting cell after the finalization of the HO and inform the user interface. As a result, an overhead of signaling arises, since the target network node needs to send additional RRC messages. An overhead in terms of throughput may arise, since the setup of the new assisting cell requires additional time and for this time the user interface is restricted to only one leg with the network (that of the target network node).

Further, there may be a service interruption. The user interface cannot continue receiving/transmitting data from/to and/or via the assisting cell as the HO calls interruption in data reception.

Also, there may be a reduction in mobility robustness. Since the mTRP operation is break-before-make (during the HO), radio link failure (RLF) recovery of the serving network node is not feasible if it occurs after the assisting cell is released at the source network node. For instance, the user equipment might experience an RLF if it does not receive the RRC reconfiguration containing the handover command.

Ericsson: "3GPP TSG-RAN WG2 #113bis-e; R2-2102820; Reconfiguration during DAPS HO", XP051991956 discloses proposals to clarify that the first possible addition of SCG or SCells and configuration of multi-TRP, UDC, EHC, SUL, sidelink or conditionalReconfiguration (CHO) in the target cell at a DAPS HO is in the RRC Reconfiguration message that includes daps-SourceRelease.

Qualcomm Incroporated: "3GPP TSG-RAN WG2 Meeting #112-e; R2-2009559; Handling of SCells and mTRP during DAPS HO, XP051942511 discloses proposals for DAPS HO, that if the source Scells/mTRP are not released before the HO command, the UE shall release SCells/mTRP upon reception of the HO command.

### SUMMARY OF SOME EXEMPLARY EMBODIMENTS

It is thus, inter alia, an object to achieve an operation of, in particular a handover in a multiple transmission and reception point mobile communication that requires less communication overhead, higher robustness against radio link failure as well as reduced service interruptions.

Previous approaches have, for example, proposed to execute a role swap between serving and assisting cells. For example, the serving cell may become an assisting cell in the assisting cell may become serving cell.

Alternatively, it has been proposed to utilize two different carrier frequencies and maintain a connection to a first frequency while executing a handover in a second frequency that is different from the first frequency.

There is provided the subject matter of the independent claims. Some further aspects are defined in the dependent claims.

Other features will become apparent from the following detailed description considered in conjunction with the accompanying drawings. It is to be understood, however, that the drawings are designed solely for purposes of illustration and not as a definition of the limits, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: a flowchart showing a TRP setup procedure (prior art);
- Fig. 2a,b: a flowchart showing a mTRP setup procedure (prior art);
- Fig. 3: a schematic diagram visualizing an exemplary aspect (prior art);
- Fig. 4a,b: a flowchart showing a handover according to an exemplary aspect;
- Fig. 5a,b: a flowchart showing a handover according to an exemplary aspect;
- Fig. 6a,b: two block diagrams showing a the entities involved in handover according to exemplary aspects;
- Fig. 7: a schematic block diagram of an apparatus configured to perform the method according to the first exemplary aspect;
- Fig. 8: examples of storage media;
- Fig. 9: an exemplary embodiment of a flowchart of a method according to the first exemplary aspect;
- Fig. 10: an exemplary embodiment of a flowchart of a method according to the second exemplary aspect;
- Fig. 11: an exemplary embodiment of a flowchart of a method according to the third exemplary aspect;
- Fig. 12: an exemplary embodiment of a flowchart of a method according to the fourth exemplary aspect.

### DETAILED DESCRIPTION OF SOME EXEMPLARY EMBODIMENTS

The following description serves to deepen the understanding and shall be understood to complement and be read together with the description as provided in the above summary section of this specification.

Embodiments shown in at least one of the figures and their description may be combined with any of the exemplary aspects and their exemplary embodiments described above.

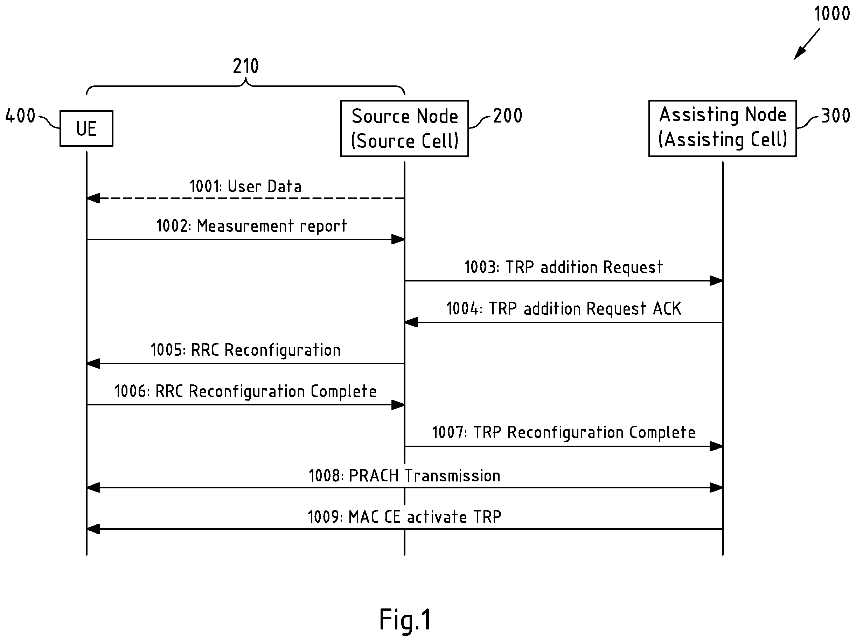

Fig. 1 is a flowchart demonstrating a TRP setup procedure 1000 as known from prior art. The three involved entities are a user equipment (UE) 400, a serving network node, in particular a source network node 200 providing and/or controlling a source serving cell 205, and an assisting network node, in particular an assisting network node 300 providing and/or controlling a source assisting cell 305. The source network node 200 and/or the assisting network node 300 may for instance be a distributed unit, a central unit and/or a gNB, in particular a gNB-DU or a gNB-CU, respectively.

In step 1001, user data may be sent from the user equipment 400 to the source network node 200, in particular via the source serving cell 205 via which a communication link 210 may be established. A measurement report may as well be sent from the UE 400 to the source network node 200 in step 1002.

In order to involve the assisting network node 300 for a handover procedure and/or for a multiple transmission and reception point arrangement, the source network node 200 may send a TRP addition request to the assisting network node 300 in step 1003. The assisting network node 300 may reply with a TRP addition request ACK in step 1004. The source network node 200 may inform the user equipment 400 of the assisting network node 300 by means of a RRC reconfiguration sent from source network node 200 user equipment 400 in step 1005. In step 1006, the user equipment 400 may acknowledge is the RRC reconfiguration by a RRC reconfiguration complete to the source network node 200 in step 1006. The source network node 200 may in turn in step 1007 inform the assisting network node 300 about the completion of the TRP reconfiguration by a TRP reconfiguration complete message sent to the assisting network node 300.

Finally, the user equipment 400 may physically connect to the assisting network node 300 by transmitting a physical random access channel (PRACH) request in step 1008 to the assisting network node 300.

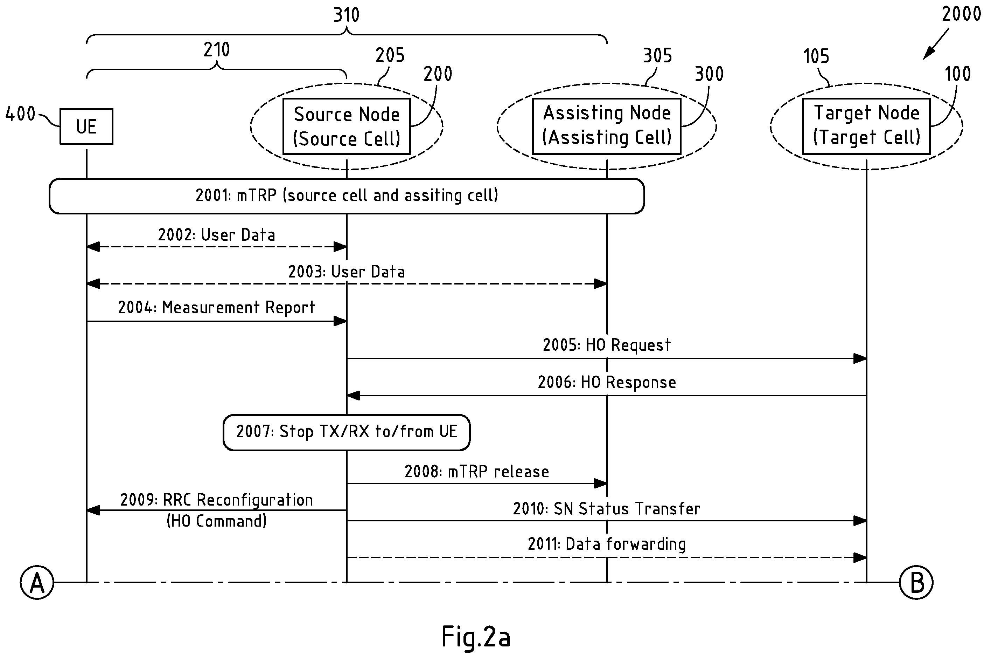

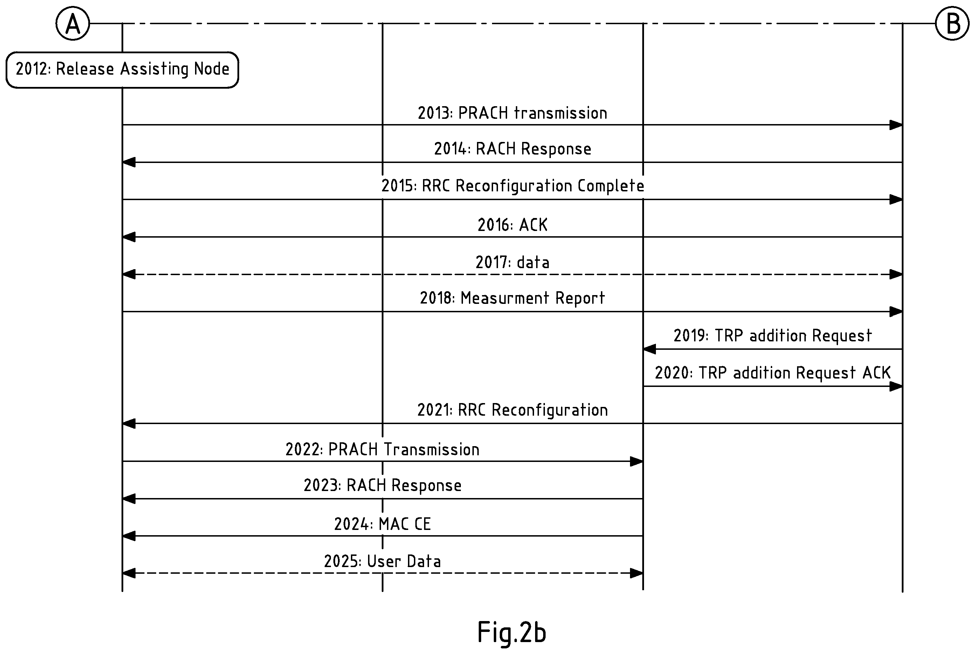

Fig. 2a,b demonstrates a series of steps 2000 involved in a handover in a multi transmission and reception point arrangement (mTRP). A user equipment 400 is connected to source network node 200 via the source serving cell 205 provided and/or controlled by the source serving cell 200. Via the source serving cell 205, a communication link 210 may be established. The user equipment 400 is as well connected to a source assisting network node 300 which provides and/or controls a source assisting cell 305. The user equipment 400 is in particular connected to the source assisting network node 300 in a communication link 310 via the source assisting cell 205. The source assisting network node 300 assists, in particular via the source assisting cell 305 provided and/or controlled by the source assisting network node 300, in a source mTRP operation involving the source network node 200 via the source serving cell 205. The source network node 200, the target network node 100 and/or the assisting network node 300 may for instance be a distributed unit, a central unit and/or a gNB, in particular a gNB-DU or a gNB-CU, respectively.

The source network node 200 obtains a measurement report from the user equipment 400 in step 2004. The source network node 200 may decide, for example at least partially based on the measurement report received in step 2004, to send a handover request to the target network node 100. The target network node 100 responds with a handover response in step 2006 to the source network node 200.

In step 2007, the transmission and reception from/to the user equipment 400 is stopped.

In step 2008, the source assisting network node 300 may obtain an mTRP release command from the source network node 200.

Afterwards, the user equipment 400 receives the handover command, including the RRC reconfiguration in step 2009.

In step 2012 the assisting network node 300 is released, in particular by the user equipment 400.

Afterwards, the user equipment 400 needs to connect to the target network node 100. To this end, the user equipment 400 exchanges a PRACH transmission with the target network node 100 in step 2013 and receives the response in step 2014.

Importantly, in step 2019 the target network node 100 needs to send a TRP addition request to an assisting network node 300. It has to be noted, that the assisting cell 305 in the source mTRP operation, involving the connection between the user equipment 400 and the target network node 100 may be different from the source assisting cell 305 that assisted the communication link 210 between the user equipment 400 and the source network node 200. Also, the source assisting network node 300 may be different from the target assisting network node 300. The source assisting network node 300 and the target assisting network node 300 may also be the same network node.

The assisting network node 300 may then be a target assisting network node 300 which assists the target network node 100 with in a target mTRP operation, in particular via a target assisting cell 305 provided and/or controlled by the target assisting network node 300.

Also in particular noteworthy, the user equipment 400 needs to connect to the target assisting network node 300 in another PRACH transmission in step 2022.

As can be seen, the user equipment 400 needs to carry out two random access procedures, one in step 2013, 2014 to the target network node 100 and one in steps 2022, 2023 to the assisting network node 300.

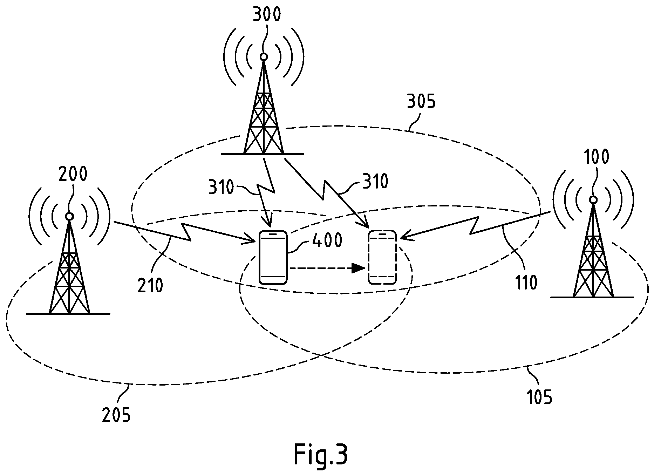

Fig. 3 shows an exemplary and simplified diagram of a handover process according to at least one of the exemplary aspects. The serving network node 200, also called source network node 200, provides a source serving cell 205. The user equipment 400 may be connected to the source network node 200 via the source serving cell 205, in particular via a communication link 210 established via the source serving cell 205. The user equipment 400 is as well connected to the assisting network node 300 via an assisting cell 305 provided and/or controlled by the assisting network node 300, in particular via a communication link 310 established via the assisting cell 305. The assisting network node 300, in particular via the assisting cell 305, may assist in the source mTRP operation, in particular in the communication link 210 between the user equipment 400 and the source network node 200.

As the user equipment 400 increases its spatial distance or otherwise changes the spatial relationship to the serving network node 200, the signal strength provided by the cell 205 may gradually become too weak for a successfully upheld communication link 210. In this case, a handover to another cell 105 and potentially to another network node 100, called target network node 100, may become necessary. The target network node may be different from the source network node. It is also possible, that the target network node is different from the source network node, in particular in the case of an inter-network-node handover. The source mTRP involving the communication link 210 between the serving network node 200 and the user equipment 400 is assisted by the assisting network node 300 via the assisting cell 305, in particular via a communication link 310 between user equipment 400 and assisting network node 300 enabled by the assisting cell 305. As has been shown for prior art in Fig. 1 and Fig. 2, it is common practice to release the assisting cell 305 provided and/or controlled by the assisting network node 300 during handover and re-establish connection to a new assisting cell 305, in particular in an assisting communication link 310 enabled by the new assisting cell 305, which is in particular provided and/or controlled by a different assisting network node 300, in particular by the target network node 100. According to example embodiments of all exemplary aspects, the source assisting cell 305 which assists the source mTRP operation involving the communication link 210 between the UE 400 and the source network node 200 may as well assist the target mTRP operation involving the communication link 110 between the target network node 100 and the user equipment 400.

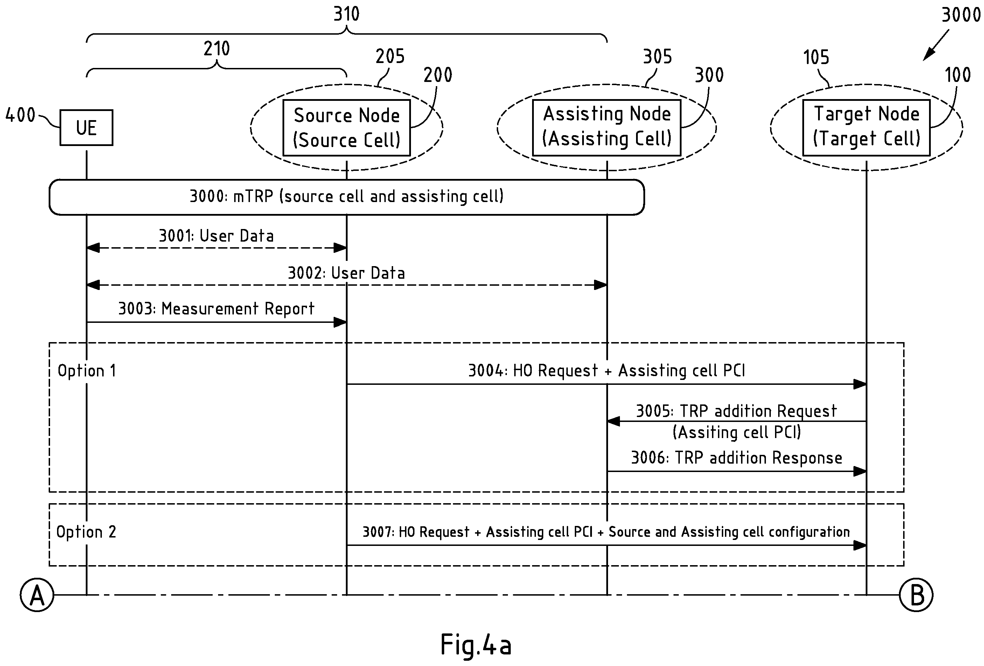

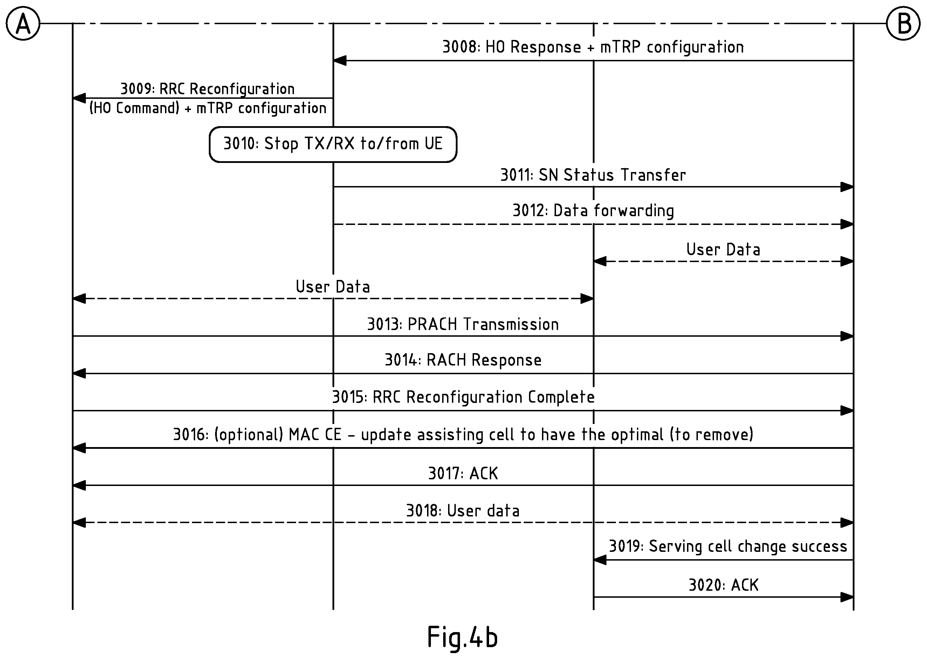

Fig. 4a,b shows a series of steps in a handover operation 3000 according to an exemplary embodiment of all exemplary aspects.

The user equipment 400 is, like in the situation shown in Fig. 2, connected in a mTRP operation to the source network node 200 involving a respective communication link 210, 310 to the source network node 200 and the assisting network node 300. The source network node 200 provides and/or controls a source serving cell 205. The source assisting network node 300 provides and/or controls a source assisting cell 305.

In step 3004, the source network node 200 obtains a measurement report from the user equipment 400. The source network node 200 may decide on the necessity of a handover, in particular based on the measurement report obtained in step 3004.

Two options of a handover of the user interface 400 from the source network node 200 to the target network node 100 according to an exemplary embodiment of all exemplary aspects are shown in figure 4a,b.

In option 1, the source network node 200 sends a handover request to the target network node 100. The source network node 200 may also send an identification information of the assisting cell 305to the target network node 100. The identification information may for instance be a PCI as shown in Fig. 2a. In other words, the target network node 100 obtains a handover request from the source network node 200 and/or obtains an identification information of the assisting cell 305, in particular of the assisting cell 305, which assists a source network node 200 in a source mTRP operation and/or assists a first communication link between a user equipment 400 and a source network node 200. The target network node 100 may obtain the identification information prior to becoming connected via a second communication link to the user equipment 400. In particular, the identification information may comprise an assisting cell PCI.

In step 3006 the target network node 100 may send a TRP addition request to the assisting network node 300. The TRP addition request sent in step 3006 may be at least partially based on the identification information of the assisting cell 305 obtained from the source network node 200. In particular, by the TRP addition request, the target network node 100 may request the assisting network node 300 to assist in a future communication link between target network node 100 and user equipment 400 via the assisting cell 305. The target network node 100 may receive a TRP addition response from the assisting network node 300 in step 3007.

The assisting network node 300 first may be called a source assisting network node 300 as it assists the source network node 200 in the source mTRP operation. After the handover it may be referred to as target assisting network node 300 as it then assists the target network node 100 in the target mTRP operation.

Figure 4a,b shows another option (option 2) for a handover according to an exemplary embodiment of all exemplary aspects.

Option 2, as shown in step 3008 comprises sending, by the source network node 200, a handover request, similar to option 1. In option 2, the source network node 200 sends an identification information of the assisting cell 305 to the target network node 100 as well. Additionally, the source network node 200 may send at least one cell configuration to the target network node 100. In particular, the source network node 200 may send a cell configuration of the source network node 200 and/or the assisting network node 300 to the target network node 100. In other words, the target network node 100 obtains a handover request, an identification of the assisting cell 305 and/or a cell configuration of the assisting cell 305.

In option 2, the target network node 100 therefore obtains at least one additional piece of information, in particular from the source network node 200, namely a cell configuration. In particular, the obtaining of the identification information obtained by the target network node 100 may be accompanied by an obtaining of at least a part of a cell configuration of the assisting cell 305. In particular, the identification information obtained by the target network node 100 may be accompanied at least a part of a cell configuration of the assisting cell. The cell configuration of the assisting cell 305 provided and/or controlled by the assisting network node 300 may at least partly be a delta cell configuration with respect to another cell configuration, in particular to a cell configuration of the source serving cell 200 and/or to a cell configuration of the target serving cell 100. The target network node 100 can particular make use of the at least one cell configuration obtained in step 3008 in avoiding an additional TRP addition request and the reception of an respective TRP addition response to/from the assisting network node 300. Instead, as the target network node 200 already has the cell configuration of the assisting network node 300 and/or the source network node 200, an mTRP arrangement of user equipment 400, target network node 100 and assisting network node 300 is possible without further coordination between the assisting network node 300 and the target network node 100.

The target network node 100 sends, in step 3009, a handover response to the source network node 200. The target network node 100 may also send a target mTRP configuration to the source network node 200. In other words, the source network node 200 obtains in handover response in step 3009. The source network node 200 may as well obtain a target mTRP configuration in step 3009. The target network node may provide a multiple transmission and reception points, mTRP, configuration to the source network node 200, wherein the target mTRP configuration may in particular comprise a target network node 100 cell configuration and/or an assisting cell 305 cell configuration. The target mTRP configuration may accompany the handover response and/or be a part of the handover response. The target mTRP configuration and the handover response may be transmitted together to the source network node 200.

The source network node 200 sends a handover command to the user equipment 400. The source network node 200 may as well transmit a target mTRP configuration to the user equipment 400. In other words, the user equipment 400 obtains a handover command, in particular from the source network node 200. The user equipment 400 obtains a target mTRP configuration, in particular via the source network node 200 from the target network node 100. The target network node 100 may thus provide a target mTRP configuration to the user equipment 400 via the source network node 200, wherein the target mTRP configuration comprises a target network node 100 cell configuration and/or an assisting cell 305 cell configuration. The target mTRP configuration may accompany the handover command and/or may be a part of the handover command. The target mTRP configuration and the handover response may be transmitted together to the user equipment 400.

After the handover command has been obtained by the user equipment 400, the connection of the user equipment 400 and the source network node 200 may be stopped in step 3011. In particular, the user equipment 400 may become disconnected from the source serving cell 205 provided and/or controlled by the source network node 200. The user equipment 400 may in particular become disconnected from the first communication link 210 to the source network node 200 which is enabled by the source serving cell 205.

In steps 3012, 3013, communication between the source network node 200 and the target network node 100 may happen. In particular, the transfer of the status of being a secondary node from the source network node 200 to the target network node 100 in step 3012 and data forwarding in step 3013.

As can be seen between steps 3013 and 3014, the user equipment 400 may still exchange user data with the assisting network node 300. Also, as the assisting network node 300 and the target network node have already established a connection, either in a TRP addition routine in steps 3006, 3007 and/or by the target network node 100 obtaining the cell configuration of the assisting network node 300 and/or the source network node 200 in step 3008. Therefore, user data may also be exchanged between the assisting network node 300 and the target network node 100.

It is thus, enabled by at least some of the exemplary aspects that user data of the user equipment 400 may still be transported by the assisting network node 300 throughout the handover process. The user equipment 400 is still connected to the communication network.

The following steps 3014 to 3019 comprise the connection of the user equipment 400 to the target network node 100. The user equipment 400 may become connected via a second communication link 110 to a target network node 100. The target network node 100 provides and/or controls a target serving cell 105 via which the second communication link 110 is enabled. In particular, the user equipment 400 connects to the target network node 100 in a random access procedure. After the communication link 110 between the user equipment 400 and the target network node 100 has been established, the target network node 100 may send a serving network node change success message to the assisting network node 300 in step 3020. The assisting network node 300 may acknowledge the serving network node change success in an acknowledgment signal sent to the target network node 100 in step 3021.

The assisting network node 300 first may be called a source assisting network node 300 and the respective cell may be called source assisting cell 305 as it assists the source cell 200 in the source mTRP operation. After the handover it may be referred to as target assisting network node 300 and target assisting cell 305 as it them assists the target cell 105 provided by the target network node 100 in the target mTRP operation.

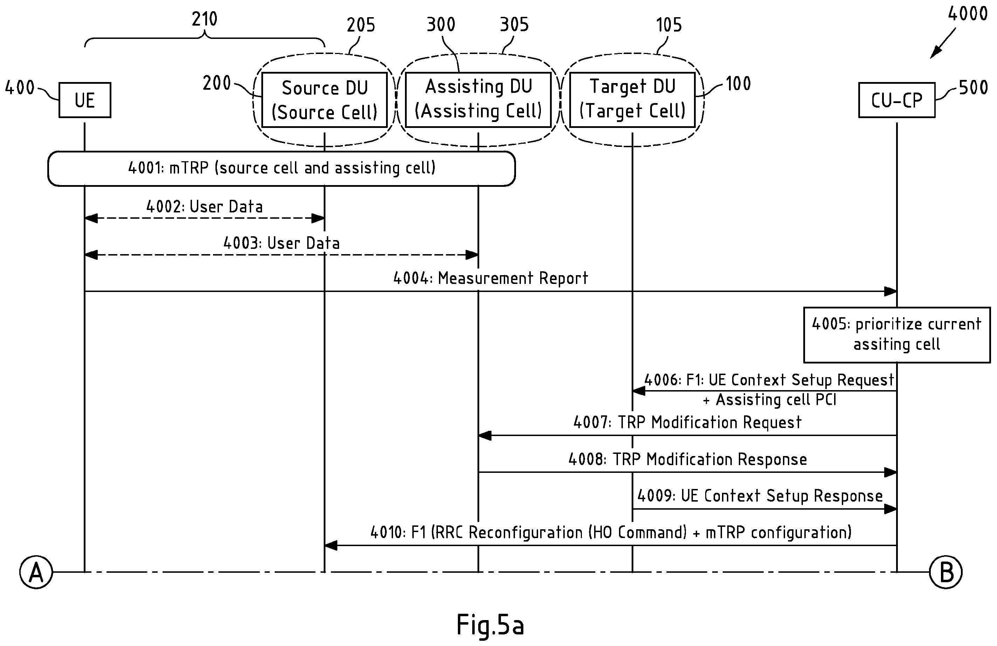

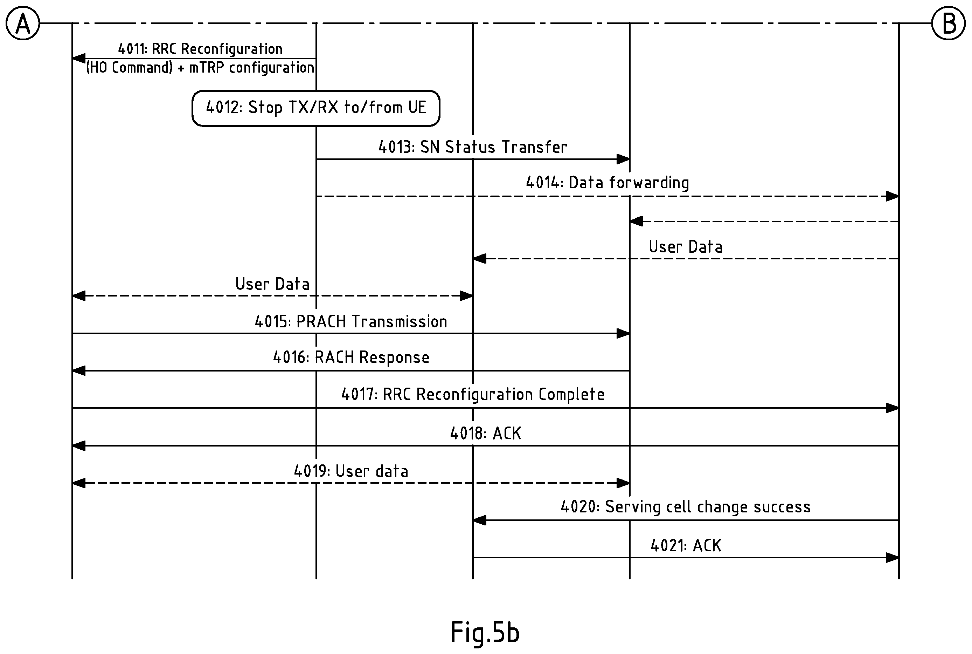

Fig. 5a,b shows a handover procedure 4000 according to an exemplary embodiment of all exemplary aspects.

The user equipment 400 is initially connected by a source serving cell to the serving network node 200, the source network node 200. If the user equipment 400 is to be handed over to the target network node 100, to which it becomes connected via a target serving cell 105. In particular, there may be a communication link 210 between the source cell 200 and the user equipment 400 is assisted by the assisting cell 300 via the target serving cell 105.

The user equipment 400 is connected to a source network node 200, in particular by a communication link 210. The user equipment 400 is connected to the assisting network node 300. In particular, it is connected to the assisting network node 300 via the assisting cell 305, in particular via the communication link 310 enabled by the assisting cell 305. The user equipment 400 is thus connected to the source network node 200, in particular via a first communication link 210, in a source mTRP operation which is assisted by an assisting cell 305 and wherein the user equipment 400 is to be connected to the target network node 100 via the target serving cell 305, in particular via a second communication link 110 enabled by the target serving cell 305 after the handover.

Additionally, the mobile communication network comprises at least one central unit 500. The central unit may control the source network node 200, the assisting network node 300 and/or a target network node 100.

At least one of and/or the source network node 200, the assisting network node 300 and the target network node 100 may be a respective distributed unit (DU). In particular, at least one of the source network node 200, the assisting network node 300 and the target network node 100 may be controlled by the central unit 500. The central unit 500 may establish communication links to the network nodes 200, 300, 100. The communication links between the central unit 500 and the network nodes 200, 300, 100 may be established by means of a radio link and/or by cable-bound communication means.

The central unit 500 may obtain a measurement report in step 4004, in particular from the user equipment 400.

The central unit 500 may in step 4005 prioritize the current assisting cell. In particular, the central unit 500 may prioritize the current assisting cell 305 in assisting in a target mTRP operation. The central unit 500 may prioritize the assisting cell 305over other cells in assisting the target network node 100 and in particular the target serving cell 105 in a target mTRP operation and/or in assisting the target mTRP operation, in particular a second communication link 110, and/or it may select the assisting cell 305 in assisting the target serving cell 105 in a target mTRP operation and/or in assisting the second communication link 110 via the target serving cell 105.

In order to enable the target network node 100 to establish a mTRP connection to the user equipment 400 that is assisted by the assisting cell 305, the central unit 500 may send a user equipment context setup request to the target network node 100 and/or send an assisting cell identification information to the target network node 100 in step 4006. Thereby, the central unit 500 informs the target network node 100, which assisting cell 305 currently assists in the source mTRP operation, in particular in the communication link 210 between the source network node and the user equipment 400. The target network node 100 can therefore identify the assisting cell 305 and may for example actively select the assisting cell 305 in assisting in the target mTRP operation, in particular in a communication link 110 between the user equipment 400 and the target network node 100 via the target serving cell 105.

The central unit 500 may thus provide an identification information of the assisting cell to the target network node 100.

The central unit 500 may as well communicate with the assisting network node 300 in steps 4007, 4008. In particular, the central unit 500 may transmit a TRP modification request in step 4007 to the assisting network node 300. The central unit 500 may obtain an according TRP modification response from the assisting network node 300. The central unit 500 may thus configure the assisting cell 305 to assist a future communication link 110 between the user equipment 400 and the target network node 100.

The central unit 500 may therefore provide a target mTRP configuration to the source network node 200 and/or the central unit 500 may provide a target mTRP configuration to the user equipment via the source network node 200.

The central unit 500 may obtain a user equipment context setup response from the target network node 100 in step 4009.

The central unit 500 may send, in step 4010, and RRC reconfiguration, a handover, and and/or a target mTRP configuration to the source network node 200. The source network node 200 therefore obtains a RRC configuration, a handover command and/or a target mTRP configuration.

The source network node 200 may send an RRC reconfiguration, a handover command and/or a target mTRP configuration to the user equipment 400. In particular, the source network node 200 forwards the RRC configuration, the handover command and/or the target mTRP configuration obtained from the central unit 500 in step 4010 to the user equipment 400.

The user equipment 400 may, in step 4012, stop the communication to the current serving cell 200, the source cell 200. The source network node 200 may inform the target network node 100 about the secondary node status in the secondary node status transfer in step 4013.

Data may be forwarded in step 4014 from the source network node 200 to the central unit 500, as well as from the central unit 500 to the target network node 100.

As shown between steps 4014 and 4015, the user equipment 400 may still transmit data and/or data to/from the assisting network node 300. In particular, connection from the user equipment 400 to the assisting cell 305 enabling the communication link 310 between the user equipment 400 and the assisting network node 300 may be upheld throughout the handover procedure 4000.

In steps 4015 to 4018, the user equipment 400 connects to the target network node 100, in particular by a random access procedure. The user equipment 400 may as well as well transmit and RRC reconfiguration complete message to the central unit 500 and receive no knowledge meant from the central unit 500 in steps 4017, 4018. User data may subsequently be exchanged between the user equipment 400 and the target network node 100.

The central unit 500 may send a service cell change success message in step 4022 the assisting network node 300. The central unit 500 may receive an acknowledgment from the assisting network node 300 in step 4021.

The central unit 500 may thus inform the assisting network node 300 about the switch of the serving network node 200, 100.

The assisting cell 305first may be called a source assisting cell 305as it assists the source cell 205 in the source mTRP operation. After the handover it may be referred to as target assisting cell 305as it them assists the target cell 105 in the target mTRP operation.

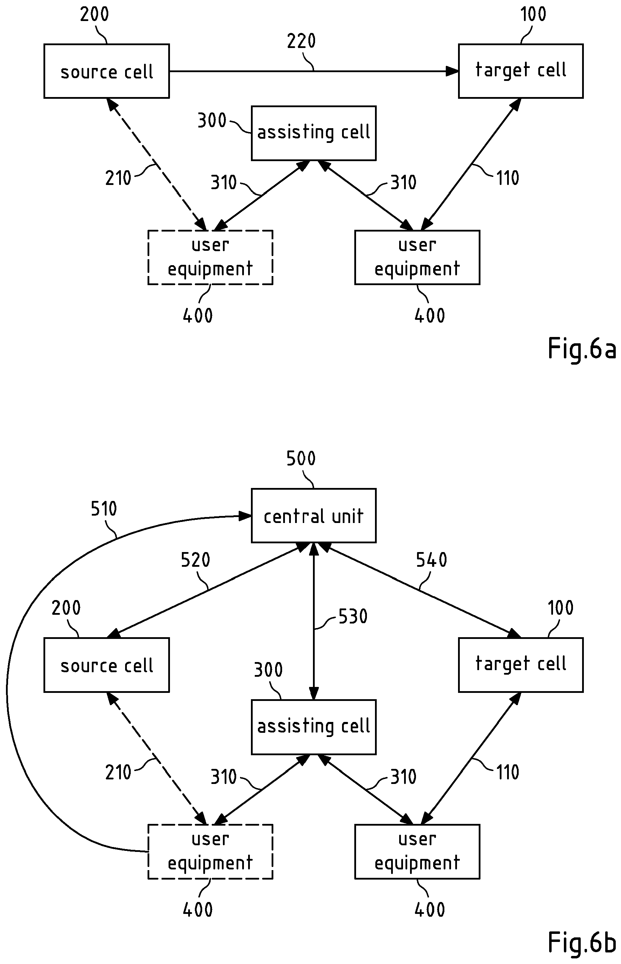

Fig. 6a shows a block diagram of an example embodiment according to all exemplary aspects comprising at least some of the entities involved in a handover.

The user equipment 400 may be connected via a source serving cell 205 (not shown) enabling a communication link 210 to the source network node 200. The user equipment 400 may be connected in a source mTRP operation involving the source serving cell 205 and an assisting cell 305 (not shown) provided by the assisting network node 300. The communication link 210 may be assisted by the assisting cell305 provided and/or controlled by the assisting network node 300. To this end, the user equipment 400 may as well be connected to the assisting network node 300in a communication link 310.

The user equipment 400 may for example transmit at least one measurement report to the source network node 200 in particular via the source cell 205 (not shown), in particular via the communication link 210.

The source network node 200 may initiate, for example at least partially based on the measurement report obtained from the user equipment 400, the handover.

The source network node 200 may, for example, transmit a handover request to the target network node 100, in particular via a communication link 220 between the source network node 200 and the target network node 100.

The source network node 200 may provide to the target network node 100 information about the presence and/or identity of the assisting cell 305 provided by the assisting node 300. In particular, the source network node 200 may provide an identity information of the assisting cell 305 to the target network node 100, in particular via the communication link 220 between the source network node 200 and the target network node 100.

For example, the source network node 200 may provide an identification information of the assisting cell 305 to the target network node 100 via Xn signaling.

Additional information of the assisting cell 305 may be provided by the source network node 200 to the target network node 100. In particular, the target network node 100 may obtain not only an identification information but also at least part of a cell configuration of the assisting cell305, in particular from the source network node 200, in particular via the communication link 220.

The target network node 100 may prioritize the assisting cell 305 provided and/or controlled by the assisting network node 300 over other potential assisting cells in assisting the target mTRP operation, in particular in assisting the communication link 110 between the user equipment 400 and the target network node 100. The target network node 100 may particular select the assisting cell 305 to assist in the target mTRP operation, in particular in the communication link 110. In particular, the target network node 100 may use the identification information and/or the cell configuration obtained from the source network node 200 to select and/or connect to and/or to use the assisting cell 305 in assisting the communication link 110.

The user equipment 400 may thus change its serving cell from the source cell provided and/or controlled by the source network node 200 to the target cell controlled and/or provided by the target network node 100 while maintaining the assisting cell 305as its assisting cell. In particular, the user equipment 400 is not required to release a connection to a first assisting cell 305and establish a new connection to a new assisting cell305, in particular by means of a random access procedure.

Fig. 6b shows a block diagram similar to the one shown in Fig. 6a of an example embodiment according to all exemplary aspects. The arrangement of the user equipment and the cells essentially identical to Fig. 6a. Therefore, the description of these parts and their relation is not repeated, but it is instead referred to the description of Fig. 6a.

In this case, the source network node 200, the assisting cell and/or the target network node 300 are controlled by a central unit 500.

The central unit 500 may obtain a measurement report from the user equipment 400, in particular by a communication link 510.

The central unit 500 may initiate a handover of the user equipment 400 from the source network node 200 to the target network node 100, in particular at least partially based on the measurement report obtained from the user equipment 400.

The central unit 500 may prioritize the assisting cell over alternative assisting cells and/or select the assisting cell 305 to assist in the communication link 110 between the user equipment 400 and the target network node 100.

The central unit 500 may provide to the target network node 100 and identification information of the assisting cell305, in particular via a communication link 540.

The central unit 500 may request a transmission and reception point modification by sending a TRP modification request to the assisting network node300, in particular via a communication link 513.

The central unit may further transmit a target mTRP configuration to the source network node 200. The central unit 500 may provide a target mTRP configuration to the user equipment 400, in particular via the source network node 100. In particular, the central unit 500 may initiate the source network node 200 to forward a target mTRP configuration to the user equipment 400.

Similarly to the arrangement shown in Fig. 6a, the configuration of a mobile communication network shown in the block diagram in Fig. 6b enables a handover of the user equipment 400 wherein the initial communication link 210 between the source network node 200 and the user equipment 400 is assisted by an assisting cell 305 and/or the source network node 200 is assisted in a source mTRP operation and the second communication link 110 between the user equipment and the target network node is assisted by the same assisting cell 305in a target mTRP operation.

In the case in Fig. 6b, the central unit 500 centrally manages the handover of the user equipment 400 from the source network node 200 for the target network node 100. In particular, the central unit 500 initiates the handover and prioritizes and/or selects an assisting cell to assist in the communication link 110.

In the case shown in Fig. 6a, on the other hand, the source network node 200 initiates the handover, and the target network node 100 prioritizes and/or selects the assisting cell to assist in the communication link 110.

For Fig. 6a and 6b, the assisting cell 300 first may be called a source assisting cell 305as it assists the source network node 200 in the source mTRP operation. After the handover it may be referred to as target assisting cell 305 as it them assists the target network node 100 in the target mTRP operation.

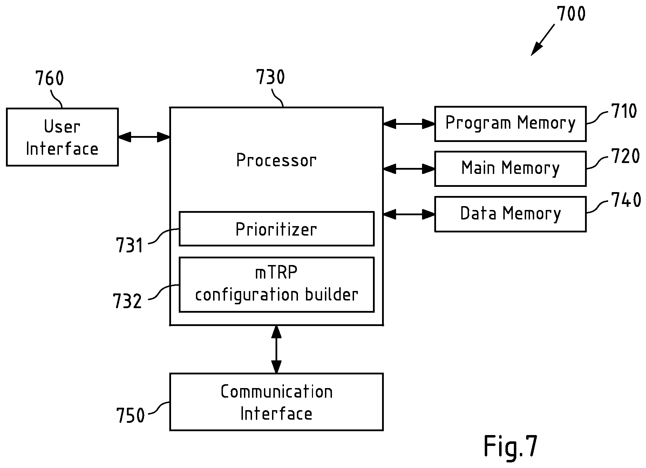

Fig. 7 is a schematic block diagram of an apparatus 700 according to an exemplary aspect, which may for instance represent a computing device, a network node, an electronic device (e.g. a user equipment) or a combination thereof, to name but a few non-limiting examples. Apparatus 700 may perform and/or control at least part of the method according to the first, second, third and/or fourth exemplary aspect. Apparatus 700 may implement at least one of a source network node, a target network node, and assisting network node, a user equipment, a central unit, and/or another member of the communication network.

Apparatus 700 comprises a processor 730, working memory 720, program memory 710, data memory 740, communication interface(s) 750, an optional user interface 760 and optionally other components.

Apparatus 700 may for instance be configured to perform and/or control or comprise respective means (at least one of 710 to 760) for performing and/or controlling the method according to the first, second, third and/or fourth exemplary aspect. Apparatus 700 may as well constitute an apparatus comprising at least one processor (730) and at least one memory (710) including computer program code, the at least one memory and the computer program code configured to, with the at least one processor, cause an apparatus, e.g. apparatus 700 at least to perform and/or control the method according to the first, second, third and/or fourth exemplary aspects.

Processor 730 may for instance further control the memories 710, 720 740, the communication interface(s) 750, the optional user interface 760 and/or other components.

The processor 730 may for example comprise a prioritizer 731. The prioritizer 731 may be configured to prioritize and assisting cell 305over alternative assisting cells. For example, the prioritizer 731 may obtain an identification information of an assisting cell305. The prioritizer 731 may decide whether the assisting cell 300, identified by the identification information of the assisting cell305, is suitable to assist in a target mTRP operation, in particular in a communication link 110 between the user equipment 400 and the target network node 100. For example, the prioritizer 731 may predict the quality of the communication link 310 between the user equipment 400 and the assisting network node 300 via the assisting cell 305. If the connection quality, in particular the predicted connection quality, of the communication link 110 between the user equipment 400 and the target network node 100 is below a pre-defined threshold, the prioritizer 731 may decide against selecting the assisting cell 305 assist in the communication link 110. If, on the other hand, the connection quality, in particular the predicted quality of the communication link 310, is above a pre-defined threshold, the prioritize or 731 may decide to select the assisting network cell 305 in assisting target mTRP operation, in particular in the communication link 110 between the user equipment 400 and the target network node 100.

The processor 730 may for example comprise a target mTRP configuration builder 732. The mTRP configuration builder 732 may be configured, to construct an mTRP configuration, in particular a target mTRP configuration. For example, the mTRP configuration builder 732 may obtain an identification information and/or at least a part of a cell configuration of the assisting cell 305. The mTRP configuration, in particular the target mTRP configuration, may then be sent to the user equipment 400, in particular via the source network node 200. The user equipment 400 may then, at least partially based on the mTRP configuration, establish a multi-transmission and reception point connection to the target network node 100 and the assisting cell 305.

The processor 730 may for instance execute computer program code stored in program memory 710, which may for instance represent a computer readable storage medium comprising program code that, when executed by processor 730, causes the processor 730 to perform the method according to all exemplary aspects.

Processor 730 (and in addition or in the alternative any other processor mentioned in this specification) may be a processor of any suitable type. Processor 730 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 310 may for instance be an application processor that runs an operating system.

Program memory 710 may in addition or in the alternative be included into processor 730. This memory may for instance be fixedly connected to processor 730, or be at least partially removable from processor 730, for instance in the form of a memory card or stick. Program memory 710 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 710 may comprise an operating system for processor 730. Program memory 710 may comprise a firmware for apparatus 700.

Apparatus 700 comprises a working memory 720, for instance in the form of a volatile memory. It may for instance be a Random Access Memory (RAM) or Dynamic RAM (DRAM), to give but a few non-limiting examples. It may for instance be used by processor 730 when executing an operating system and/or computer program.

Data memory 740 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 740 may for instance store one or more pieces of identification information, one or more mTRP configurations, in particular target mTRP configuration, one or more cell configurations, or a combination thereof, to name but a few non-limiting examples.

Communication interface(s) 750 enable apparatus 700 to communicate with other entities. The communication interface(s) 750 may for instance comprise a wireless interface, e.g. a cellular radio communication interface and/or a WLAN interface) and/or wire-bound interface, e.g. an IP-based interface, for instance to communicate with entities via the Internet. Communication interface(s) may enable apparatus 700 to communicate with other entities. Examples of communication interface(s) 750 are cable-bound communication means, radio communication means comprising, for example, at least one antenna, and/or different communication means. In particular the communication mean(s) 750 may be suitable to establish communication links 110, 210, 310. In particular the communication mean(s) 750 may be suitable to enable Xn signaling, in particular between network nodes.

User interface 760 is optional and may comprise a display for displaying information to a user and/or an input device (e.g. a keyboard, keypad, touchpad, mouse, or a combination thereof, to name but a few non-limiting examples.) for receiving information from a user.

Some or all of the components of the apparatus 700 may for instance be connected via a bus. Some or all of the components of the apparatus 700 may for instance be combined into one or more modules.

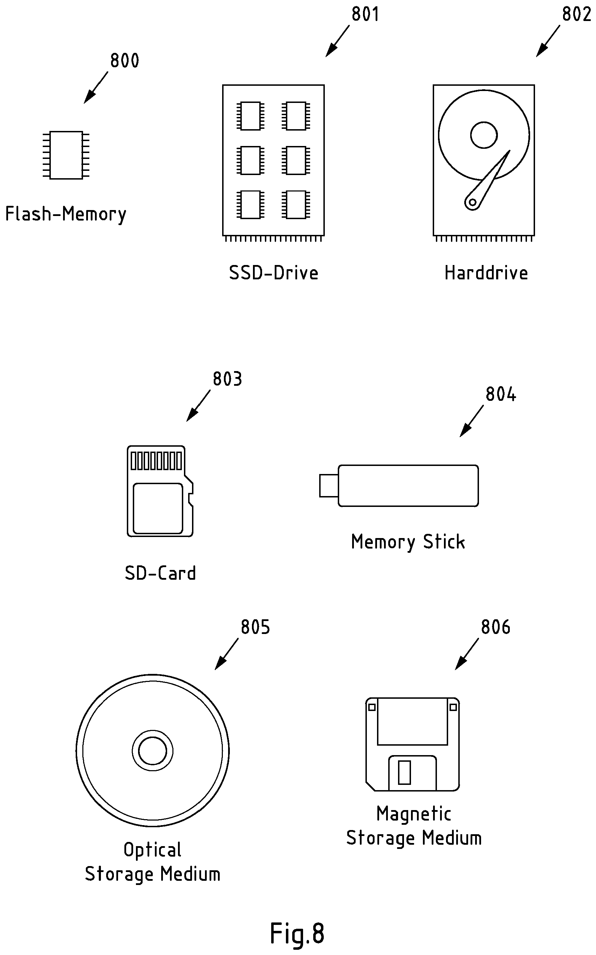

Fig. 8 is a schematic illustration of examples of tangible and non-transitory computer-readable storage media according to the present invention that may for instance be used to implement memory 710, memory 720 and/or memory 740 of apparatus 700 of Fig. 7a. To this end, Fig. 8 displays a flash memory 800, which may for instance be soldered or bonded to a printed circuit board, a solid-state drive 801 comprising a plurality of memory chips (e.g. Flash memory chips), a magnetic hard drive 802, a Secure Digital (SD) card 803, a Universal Serial Bus (USB) memory stick 804, an optical storage medium 805 (such as for instance a CD-ROM or DVD) and a magnetic storage medium 806.

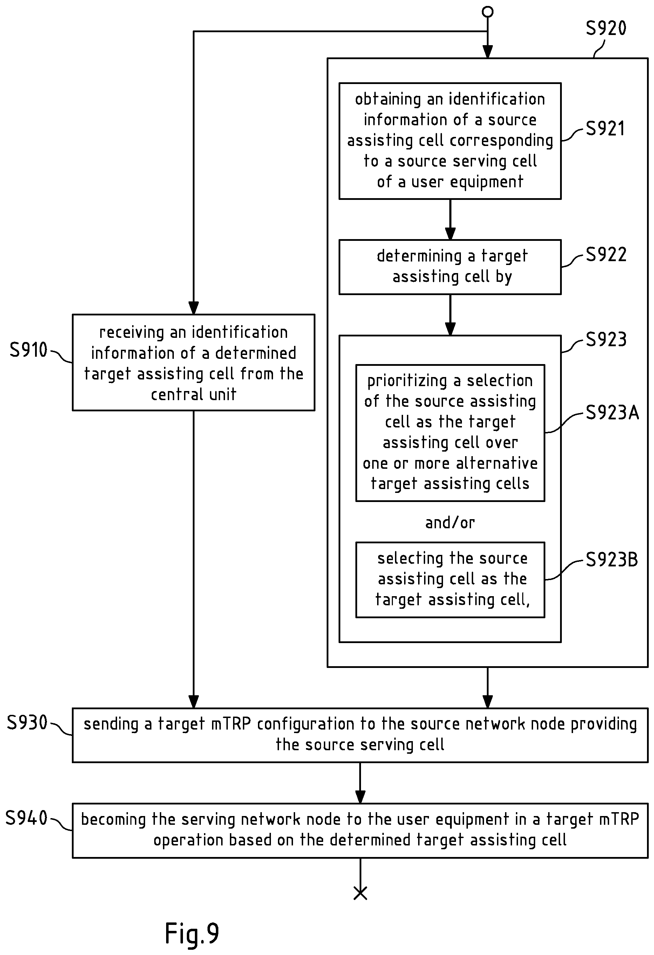

Fig. 9 shows a flowchart of a method according to the first exemplary aspect that may be performed and/or controlled by a target network node, for instance.

Two alternative ways of making a determined target assisting cell available to the target network node are shown.

In step S910, the target network node receives an identification information of a determined target assisting cell from a central unit. The central unit may for instance control the target node and/or a source network node.

As an alternative to step S910, Step S920 and its sub-steps may be followed.

Step S921 comprises obtaining, from a source network node or from a central unit of the target network node, an identification information of a source assisting cell assisting a source serving cell of a user equipment in a source multiple transmission and reception point (mTRP) operation. The identification information may in particular be obtained prior to the target network node becoming a serving network node of the user equipment. The identification information may be obtained e.g. by receiving the identification information from a source serving cell and/or from a central unit, in particular a central unit controlling the target network node.

Step S922 comprises determining a target assisting cell based on the obtained identification information by prioritizing a selection of the source assisting cell as the target assisting cell over one or more alternative target assisting cells (S923A) and/or selecting the source assisting cell as the target assisting cell (S923B). The target assisting cell assists the target network node in a target mTRP operation. Prioritizing is done by the target network node itself. Prioritizing may comprise the evaluation of a measurement, in particular of a measurement report comprising information about a suitability of the source assisting cell as the target assisting cell.

Once the target assisting cell has been determined, step S930 is carried out. Here, the target network node sends a target mTRP configuration, comprising a cell configuration of the determined target assisting cell, to the source network node providing the source serving cell. The target mTRP configuration may be part of a handover response and/or a handover command.

Step S940 comprises becoming the serving network node to the user equipment in a target mTRP operation based on the determined target assisting cell, while a user data transmission between the user equipment and the source assisting cell is uninterrupted, wherein the target assisting cell assists the target network node in the target mTRP operation. The target network node may in particular provide and/or control a target serving cell to the user equipment in the target mTRP operation. The target serving cell may replace a source serving cell that previously served the user equipment in a source mTRP operation prior to the handover.

The steps S910 or S920 to S940 may be performed and/or controlled in the order shown in Fig. 9 or alternatively in a different order.

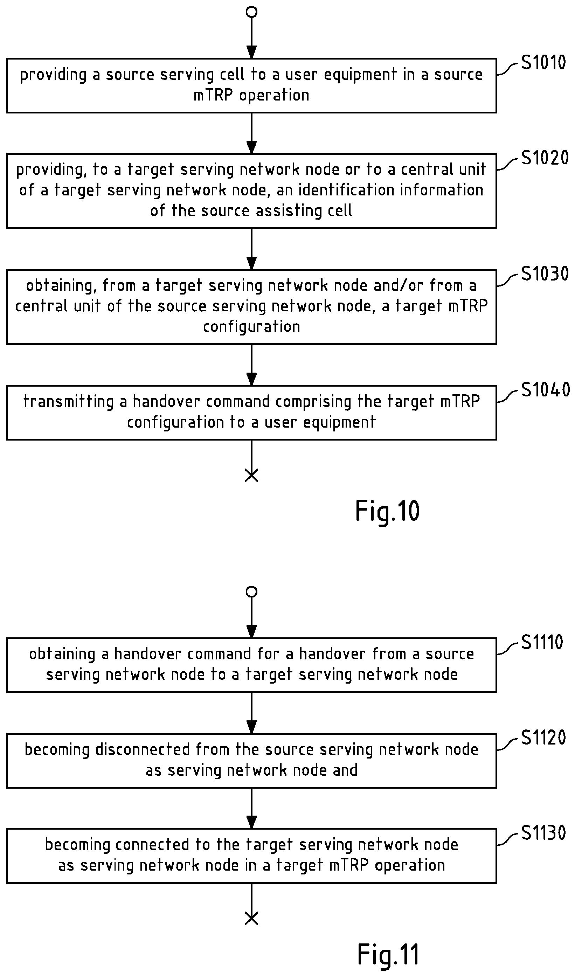

Fig. 10 shows a flowchart according to the second exemplary aspect that may be performed and/or controlled by a source network node, for instance.

The source network node may, as shown in step S1010, provide and/or control a source serving cell in a source mTRP operation. It may in particular provide a source serving cell to a user equipment in a source mTRP operation. The source network node is therefore a serving network node prior to the handover to a target network node.

Step S1020 comprises providing, to a target network node or to a central unit of a target network node, an identification information of a source assisting cell. The identification information of the source assisting cell may enable the target network node or the central unit of the target network node to retain the source assisting cell of the source network node as a target assisting cell in a target mTRP operation during and/or after the handover. The identification information of the source assisting cell may in particular comprise a physical cell identity (PCI) of the source assisting cell. The providing may be achieved by means of a radio communication link between the target network node and the source network node. The providing may be achieved by means of Xn signaling. Xn signaling may comprise using a communication link, e.g. a radio communication link or a cable-bound communication link between the source network node and the target network node. Providing an identification information to a central unit may in particular be achieved by a communication link between the source network node and the central unit, in particular a central unit controlling the target network node and/or the source network node.

Step S1030 comprises obtaining, from the target network node and/or from the central unit of the source network node, a target mTRP configuration comprising a target assisting cell cell configuration comprising at least information of a target assisting cell for a target mTRP operation. In particular, the target mTRP configuration may be obtained as part of a handover command and/or handover response. The target assisting cell is in particular determined by prioritizing a selection of the source assisting cell as the target assisting cell over alternative target assisting cells and/or selecting the source assisting cell as the target assisting cell and in particular assist the target network node in a target mTRP operation.

The target mTRP configuration may comprise a target assisting cell cell configuration of a target assisting cell intended to assist in the mTRP operation of the target network node. The target assisting cell cell configuration may enable the target network node to easily utilize the target assisting cell in the target mTRP operation, in particular without a further TRP addition request from the target network node to the target assisting network node.

Step S1040 comprises transmitting a handover command comprising the target mTRP configuration to a user equipment, wherein the transmitted handover command instructs the user equipment to becoming disconnected from the source network node, and becoming connected to the target network node in the target mTRP operation while a user data transmission between the user equipment and the source assisting cell is uninterrupted. The source network node may be the source network node of the user equipment in a source mTRP operation assisted by a source assisting cell, wherein the transmitted target mTRP configuration instructs the user equipment to become connected to the target network node as serving network node in an mTRP operation assisted by the target assisting cell. The target mTRP configuration may comprise information sufficient for the user equipment to connect to the target network node and to the target assisting network node. In particular, the target mTRP configuration may enable the user equipment to execute a handover from the source network node to the target network node, in particular while maintaining the source assisting cell as the target assisting cell after the handover is performed and/or controlled.

The steps S1010 - S1040 may be performed and/or controlled in the order shown in Fig. 10 or alternatively in a different order.

Fig. 11 shows a flowchart according to the third exemplary aspect that may be performed and/or controlled by a user equipment, for instance.

Step S1110 comprises obtaining a handover command comprising a target mTRP configuration comprising a target assisting cell cell configuration from a source network node, wherein the source network node serves the user equipment in a source mTRP operation assisted by a source assisting cell, wherein the handover command and/or the target mTRP configuration causes the user equipment to becoming disconnected from the source network node, and becoming connected to a target network node in a target mTRP operation while a user data transmission between the UE and the source assisting cell is uninterrupted. The handover command may in particular be intended for a handover from a source network node to a target network node, wherein the source network node is a serving network node of the user equipment in a source mTRP operation assisted by a source assisting cell wherein the handover command comprises and/or is accompanied by a handover configuration for and/or instructing the user equipment to (Step 1120) becoming disconnected from the source network node as serving network node, and (Step 1130) becoming connected to the target network node as serving network node in a target mTRP operation, wherein the target mTRP operation is assisted by the source assisting cell as a target assisting cell. Steps S1120 and S1130 are instructed by the HO command and may or may not be executed by the UE. The handover command and/or the handover configuration may contain information by which the user equipment is enabled and/or caused to release the connection to the source network node, in particular to the source serving cell provided and/or controlled by the source network node. The handover command and/or configuration further contains commands and/or configurations by which the user equipment is enabled and/or caused to initiate and/or carry out the establishing of a target mTRP operation, wherein the target network node is the serving network node of the target mTRP operation and the target assisting node is the assisting network node of the target mTRP operation.

The steps S1110 - S1130 may be performed and/or controlled in the order shown in Fig. 11 or alternatively in a different order.

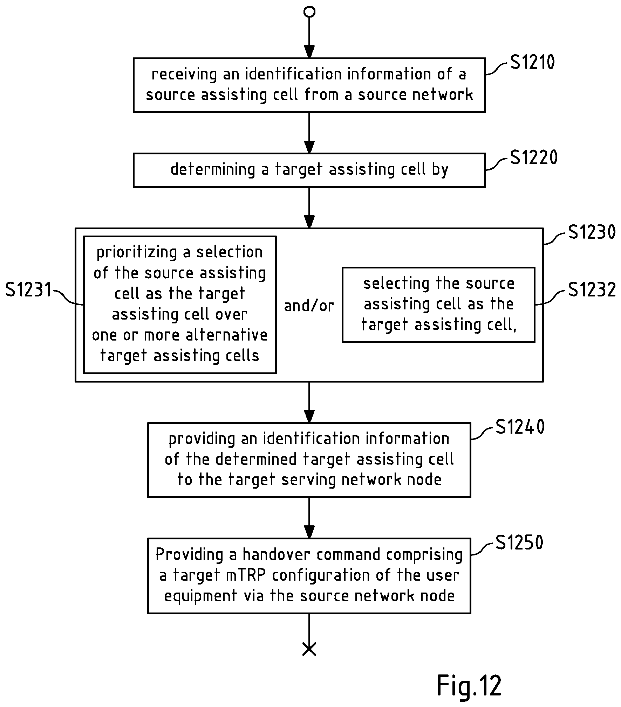

Fig. 12 shows a flowchart according to a fourth exemplary aspect that may be performed and/or controlled by a central unit.

Step. S1210 comprises receiving an identification information of a source assisting cell from a source network. The source assisting cell assists the source network node in an mTRP operation wherein the source network node provides the serving cell of the source mTRP operation. The transmission of the identification information can be realized by wireless communication in the communication network and/or by cable-bound communication means, in particular by Xn signaling.

Step S1220 comprises determining a target assisting cell.

The target assisting cell may be determined in Step S1230, in particular by (step S1231) prioritizing a selection of the source assisting cell as the target assisting cell over alternative target assisting cells and/or (step S1232) selecting the source assisting cell as the target assisting cell, wherein the target assisting cell assists the target network node in a target mTRP operation. A prioritizing of a cell may lead to a selection of a cell as the target assisting cell. The prioritized cell may in particular be selected even if it is not the best available cell in terms of the connection quality it can provide to the user equipment.

Step S1240 comprises providing an identification information of the source assisting cell to the target network node. The central unit may have access to information about the identification information of at least some of the mTRP operations involving network node(s) which it controls. As the central unit may control the target network node as well as the source network node and the source assisting network node, it can transfer the relevant information for a target mTRP operation to the target network node. The target network node may then be enabled by the identification information obtained from the central unit to identify the source assisting cell and in particular select the source assisting cell as the target assisting cell in the target mTRP operation.

Step 1250 comprises providing a handover command comprising a target mTRP configuration comprising a target assisting cell cell configuration from a source network node, wherein the source network node serves the user equipment in a source mTRP operation assisted by a source assisting cell, wherein the handover command and/or the target mTRP configuration causes the user equipment to becoming disconnected from the source network node, and becoming connected to a target network node in a target mTRP operation while a user data transmission between the UE and the source assisting cell is uninterrupted. Through this HO command, the UE is enabled to connect in a target mTRP operation and to retain the source assisting cell of the previous source mTRP operation for the target mTRP operation.

The method may further comprise the central unit indicating to the target network node the retention of the source assisting cell in order to avoid the target network node rejecting the source assisting cell for assisting the target mTRP operation. As the target network node may select a target assisting cell for a target mTRP operation based on criteria such as connection quality, position, available frequency and other criteria, it may, based on these criteria favor a target assisting cell different from the source assisting cell. It may therefore reject the source assisting cell as the target assisting cell. To avoid the target network node to reject the source assisting cell, the retention of the source assisting cell may be indicated to the target network node, for example by a flag. Given such an indication (e.g. the flag), the target network node may accept the source assisting cell as the target assisting cell even though it may not - according to the criteria it usually applies - qualify as the ideal target assisting cell.

The method may further comprise initiating a handover of a user equipment from a source network node to a target network node, wherein the user equipment is connected to the source network node in a source mTRP operation assisted by a source assisting cell and wherein the user equipment is to be connected to the target network node in a target mTRP operation assisted by a target assisting cell after the handover. The central unit may control multiple network nodes, in particular multiple distributed units. It may monitor the connection quality between user interfaces and network nodes under its control, for example by receiving measurement reports from the user equipments, in particular via the respective network nodes to which the respective user equipment is connected. The central unit may for example monitor the connection qualities provided by assisting cell and/or serving cells in a (source) mTRP operation of a user equipment. The central unit may then initiate a handover if a connection quality provided by the serving cell is too low, i.e. below a pre-determined threshold. An initiating may involve communication with at least one of the involved network nodes, in particular with the source network node of a user equipment and/or with the source assisting network node of the mTRP operation. The initiating may involve a sending of a command and/or of an information from the central unit to a network node, in particular to a serving network node and/or to an assisting network node. The initiating may as well involve the selection/determining of a suitable target network node and/or a suitable target serving cell.

The steps S1210 - S1250 may be performed and/or controlled out in the order shown in Fig. 12 or alternatively in a different order.

All exemplary aspects may further be combined with at least parts of the below principles and/or aspects:
1. Enabling the source serving network node to inform the target serving network node using Xn signaling about the presence and identity of assisting cell(s) of the mTRP operation (e.g., obtaining an identification information of an assisting cell, which assists a source cell 200 in a source mTRP operation and/or assists a first communication link between a user equipment and a source cell, by the target cell).
2. The target serving network node prioritizes mTRP setup with the same assisting cell as the source serving network node and provides HO configuration (including mTRP configuration, in particular a target mTRP configuration) to the source which in turn sends it to the UE (e.g., by becoming connected to the user equipment by a second communication link, wherein the target cell prioritizes the assisting cell over one or more alternative assisting cells in assisting the second communication link). It is noted that the target serving network node is proposed to select the same assisting cell as source serving network node, provided the UE measurements of the assisting cell (as received by target serving network node) is above a pre-defined threshold, regardless of it being the best cell.
3. The assisting cell is proposed to be retained during the HO and hence not needing RACH despite executing serving cell change and RACH at the target cell (e.g. by the target cell selecting the assisting cell for assisting the second communication link).
4. In CU-DU case the CU-CP may prioritize mTRP with the same assisting cell or may prioritize a handover to a cell in the same DU as the assisting cell so as to ensure that the assisting cell is retained during HO and UE will not experience service interruption time during the HO (e.g. by prioritizing the assisting cell over other cells in assisting the second communication link and/or selecting the assisting cell in assisting the second communication link). This information (assisting DU/cell and a FLAG to indicate selection of same assisting cell as source) is sent over F1 from CU-CP to DU.
5. The target serving network node may select a different assisting cell after serving cell change or handover (e.g., by exchanging the assisting cell after the communication link between the target cell and the user equipment has been established, wherein the target cell selects a different assisting cell after the communication link between the target cell and the user equipment has been established).

Following the mTRP setup procedure described in the background section, the UE communicates with the network via the source serving network node and an additional network node for S-TRP operation as shown in step 1/2/3 of Fig.4a,b. The UE sends a Measurement report (upon an e.g. A3 event is met) to the Source serving network node (step 4).

### Option 1:

- Based on the measurement report, the Source serving network node sends a HO request to the Target serving network node with the Assisting Cell PCI so as to inform the target serving network node about the current mTRP operation and the associated assisting cell. (Step 5)
- The Target serving network node sets up mTRP by communicating with the Assisting Network node (Steps 5-6) the PCI of the assisting cell (received from the source serving network node) to ensure HO maintaining the assisting cell. The target serving network node may prioritize selection of the same assisting cell if the measurements are above a predefined threshold regardless of whether or not it is the best cell.

### Option 2:

- Based on the measurement report, the Source serving network node sends a HO request to the Target with the Assisting Cell PCI and the Source and Assisting cell cell configurations. The Target cell uses its own cell configuration and the Source and Assisting cell cell configurations to prepare the RRC configuration of the target cell and Assisting cell without requiring to communicate with the Assisting cell directly (Step 8). It is noted that the cell configuration of the Assisting Cell may be a "delta" cell configuration with reference the serving cell; thus the Target serving network node, for preparing the cell configuration of the Assisting cell, requires to obtain it either from the Source (as delta of the Source) or from the Assisting Network node. This option is particularly valid when the target cell configuration itself is a delta cell configuration of the source.

E.g.: in a disaggregated gNB with multiple DUs, it may so happen that the source, assisting and target cells belong to the same or different gNB-DUs. In such a case, the communication between target and assisting DUs may be suppressed.
- The target serving network node provides the HO Response to the source serving network node including the mTRP configuration consisting of the target cell and Assisting cell configuration. (Step 9)
- If the mTRP operation is rejected by the target cell or assisting cell, this is indicated via lack of mTRP configuration
- The Source provides the HO Command (containing the mTRP configuration) to the UE (Step 10)
- Then the UE performs the HO to the Target Cell as indicated by Rel.15; the UE receives data from the Assisting Cell during the HO since the user plane is not impacted. (Steps 10- 18).
- Once the HO is finalized the Target serving network node informs the Assisting Network node about the switch of the serving network node (Step 19).

The same procedure for the CU-DU architecture split (e.g., see Fig. 5a,b)

The UE is configured with inter-cell mTRP comprising the source cell and the assisting cell (step 1/2/3).

The UE sends a Measurement report to the CU (upon e.g. A3 measurement event is met) (step 4)
- The CU may decide to prioritize the Assisting Cell in mTRP configuration instead of other cells in order to ensure no interruption during the handover of the serving cell (step 5) (e.g., by prioritizing the assisting cell over other cells in assisting the second communication link and/or selecting the assisting cell in assisting the second communication link); in any case the CU may prepare multiple Assisting Cells in this step, including the Current Assisting one.
   o The CU sends the F1 Context Setup Message to the Target DU containing the Assisting Cell PCI and a FLAG to indicate retention of mTRP assisting cell during HO. (Step 6). This ensures that the target DU doesn't reject the selection of assisting cell.
- It is noted that if the assisting cell selection during HO is sub-optimal, the target may change the assisting cell immediately after HO.
   o The CU informs the Assisting Cell (DU) about the forthcoming change in the Serving Cell (Step 7) (e.g., by informing the assisting cell about the switch of the serving cell), if the assisting cell is part of a different DU than the target DU.
   o The Assisting DU acknowledges respectively (Step8)
   o Assisting DU may accept the addition by a target and also "maintained" during the HO procedure (Success scenario)
   o Assisting DU may reject this addition and indicate
   o It doesn't accept the addition at all.
   o It doesn't accept the alive phase during HO but the assisting cell can be activated after the HO with the target cell succeeds.
   o it doesn't support the alive phase during HO procedure but it may keep the serving DRBs on during HO.
   o The Target DU provides the HO response to the CU-CP (Step 9)
   o The CU provides through F1 interface the RRC Configuration to the Source Cell including the cell configuration of the Assisting Network node. (Step 9)
   o The Source Cell provides the HO Command (containing the mTRP configuration consisting of the target cell cell configuration and assisting cell cell configuration) to the UE (Step 10)
   o Then the UE performs the HO to the Target Cell as; the UE receives data from the Assisting Network node during the HO since the user plane is maintained. (Steps 11-18). No RACH is required at the assisting cell, despite RACH and HO at the target cell.
   o Once the HO is finalized the Target serving network node informs the Assisting Network node about the switch of the serving network node (Step 20).

It is noted that the UE does not need to perform RA to the Assisting network node upon the HO since anyway it is synchronized to it. This may mean that the C-RNTI allocated to the UE in the assisting cell is retained during and post serving cell change.

It is noted that Fig. 5a,b assumes that, in order to continue to receive data from the assisting cell after sending the handover command, the PDCP of the target serving network node shall process the packets according to new security key and deliver them to the UE via the link of the assisting cell. In a disaggregated architecture, if the mTRP operation is limited to intra-CU, the PDCP remains same in both source and target serving cells.

Alternatively, the serving cell/DU may continue to send data to the UE over assisting cell until HO success message (or UE context release in case of CU-DU) is received. This means that the PDCP of the assisting cell will use the security key of the old serving cell until it is updated.

It is noted that Fig. 5a,b assumes the already available L3 HO mechanism for mobility between source and target serving network nodes/cells. The same solution can be applied even when the L1 HO mechanism is used for serving cell change from source to target.

Example embodiments may allow one or more of the following:
- Elimination of service-interruption time during HO of the serving cell by maintaining the connection active with the Assisting Cell
- Reduction in the signaling since during the HO the UE receives the mTRP configuration with the HO command
- Increase in the throughput since the UE does not need to set up from scratch the mTRP configuration as it maintains it.
- Better chances of serving cell RLF recovery since assisting cell is always maintained.

### List of abbreviations

- CU: Central unit
- CP: Control Plane
- DU: Distributed Unit
- EN/DC: EUTRA-NR Dual Connectivity
- HO: Handover
- RA: Random Access
- mTRP: multi-TRP
- TRP: Transmission and Reception Point
- UE: User Equipment
- MAC CE: Medium Access Control Control Element
- MR-DC: Multi-Rat Dual Connectivity
- NR-DC: New Radio Dual Connectivity
- CA: Carrier Aggregation
- RLF: Radio Link Failure
- RRC: Radio Resource Control
- PCI: Physical Cell Identity
- MCG: Master Cell Group
- SCG: Secondary Cell Group
- RAT: Radio Access Technology
- RACH: Random Access Channel
- MIMO: Multi Input Multi Output

## Claims

1. A target network node (100) of a mobile communication network, comprising at least one processor; and at least one memory including computer program code; the at least one memory and the computer program code configured to, with the at least one processor, cause the target network node at least to perform:
- receiving an identification information of a determined target assisting cell from a central unit (500);
or
- obtaining, from a source network node (200) or from a central unit of the target network node, an identification information of a source assisting cell (300) assisting a source serving cell of a user equipment (400) in a source multiple transmission and reception point (mTRP) operation, and
- determining a target assisting cell based on the obtained identification information by
- prioritizing a selection of the source assisting cell as the target assisting cell over one or more alternative target assisting cells and/or
- selecting the source assisting cell as the target assisting cell;
after the receiving or the obtaining and the determining is performed:
- sending a target mTRP configuration, comprising a cell configuration of the determined target assisting cell, to the source network node (200) providing the source serving cell; and
- becoming the serving network node to the user equipment (400) in a target mTRP operation based on the determined target assisting cell, while a user data transmission between the user equipment and the source assisting cell is uninterrupted,
wherein the determined target assisting cell assists the target network node in the target mTRP operation.

2. The target network node (100) according to the preceding claim, wherein
- the transmitted target mTRP configuration is comprised in a handover command that instructs the user equipment to
- becoming disconnected from the source network node, and
- becoming connected to the target network node in the target mTRP operation while the user data transmission between the user equipment and the source assisting cell is uninterrupted.

3. The target network node (100) according to one of the preceding claims, wherein
- the identification information is a part of and/or is accompanied by a handover preparation request; and/or
- the identification information is accompanied by an obtaining of at least a part of a cell configuration of the source assisting cell and/or a mTRP configuration of the source assisting cell.

4. The target network node (100) according to one of the preceding claims, wherein
- the obtaining is at least partially implemented via Xn signaling.

5. The target network node (100) according to one of the preceding claims, the at least one memory and the computer program code configured to, with the at least one processor, cause the target network node further to perform:
- transmitting a transmission and reception point, TRP, addition request to the network node providing and/or controlling the target assisting cell based on the obtained identification information.

6. The target network node (100) according to one of the preceding claims, the at least one memory and the computer program code configured to, with the at least one processor, cause the target network node further to perform:
- configuring the target network node to provide a distributed unit and selecting, based on the obtained identification information, the source assisting cell as the target assisting cell, provided a measurement of the source assisting cell received from and/or by the source network node, is above a pre-defined threshold and/or
- providing a target multiple transmission and reception points, mTRP, configuration to the source network node, wherein the target mTRP configuration comprises a target serving cell cell configuration and/or a target assisting cell cell configuration and/or wherein
- providing a target mTRP configuration to the user equipment, via the source network node, wherein the target mTRP configuration comprises a target serving cell cell configuration and/or a target assisting cell cell configuration.

7. The target network node (100) according to one of the preceding claims, wherein the at least one memory and the computer program code configured to, with the at least one processor, cause the target network node further to perform:
- informing a network node controlling the source assisting cell about a switch of the serving network node of the user equipment from the source network node to the target network node.

8. The target network node (100) according to one of the preceding claims, wherein the at least one memory and the computer program code configured to, with the at least one processor, cause the target network node further to perform:
- changing the target assisting cell of the target mTRP operation after the target network node has become the serving network node of the user equipment, comprising selecting a different target assisting cell to assist the target mTRP operation after the target network node has become the serving network node of the user equipment.

9. A source network node (200) of a mobile communication network, comprising at least one processor; and at least one memory including computer program code; the at least one memory and the computer program code configured to, with the at least one processor, cause the source network node at least to perform:
- providing a source serving cell to a user equipment (400) in a source mTRP operation;
- providing, to a target network node (100) or to a central unit (500) of a target network node, an identification information of a source assisting cell of the source mTRP operation;
- obtaining, from the target network node and/or from the central unit of the source network node, a target mTRP configuration comprising a target assisting cell cell configuration comprising at least information of a target assisting cell for a target mTRP operation;
- wherein the target assisting cell is determined by the target network node or by the central unit based on the identification information of the source assisting cell by
- prioritizing the source assisting cell as the target assisting cell over one or more alternative target assisting cells and/or
- selecting the source assisting cell as the target assisting cell;
wherein the target assisting cell assists the target network node in a target mTRP operation;
- transmitting a handover command comprising the target mTRP configuration comprising the target assisting cell cell configuration to the user equipment (400),
wherein
- the transmitted handover command instructs the user equipment to
- becoming disconnected from the source network node, and
- becoming connected to the target network node in the target mTRP operation while a user data transmission between the user equipment and the source assisting cell is uninterrupted.

10. A user equipment, UE, (400) comprising at least one processor; and at least one memory including computer program code; the at least one memory and the computer program code configured to, with the at least one processor, cause the UE at least to perform:
- obtaining a handover command comprising a target mTRP configuration comprising a target assisting cell cell configuration from a source network node (200), wherein the source network node serves the user equipment in a source mTRP operation assisted by a source assisting cell, wherein the handover command and/or the target mTRP configuration causes the user equipment to
- becoming disconnected from the source network node, and
- becoming connected to a target network node in a target mTRP operation while a user data transmission between the UE and the source assisting cell is uninterrupted.

11. The user equipment (400) according to claim 10, wherein the at least one memory and the computer program code configured to, with the at least one processor, cause the user equipment further to perform:
- becoming disconnected from the source network node (200), and
- becoming connected to the target network node (100) as serving network node in the target mTRP operation while the user data transmission between the UE and the source assisting cell is uninterrupted, wherein the target mTRP operation is assisted by the source assisting cell as the target assisting cell.

12. A central unit (500) of a mobile communication network, comprising at least one processor; and at least one memory including computer program code; the at least one memory and the computer program code configured to, with the at least one processor, cause the central unit at least to perform:
- receiving an identification information of a source assisting cell from a source network node (200),
- determining a target assisting cell by
- prioritizing a selection of the source assisting cell as the target assisting cell over alternative target assisting cells and/or
- selecting the source assisting cell as the target assisting cell,
wherein the target assisting cell assists a target network node in a target mTRP operation; and
- providing an identification information of the determined target assisting cell to the target network node;
- providing a handover command comprising a target mTRP configuration comprising a target assisting cell cell configuration to the user equipment (400) via the source network node (200) wherein the handover command instructs the user equipment to
- becoming disconnected from the source network node, and
- becoming connected to the target network node in the target mTRP operation while a user data transmission between the user equipment and the source assisting cell is uninterrupted.

13. The central unit (500) according to claim 12, the at least one memory and the computer program code configured to, with the at least one processor, cause the central unit further to perform:
- indicating to the target network node (100) the retention of the source assisting cell as the target assisting cell in order to avoid the target network node rejecting the source assisting cell for assisting the target mTRP operation.

14. The central unit (500) according to one of the claims 12 to 13, wherein the at least one memory and the computer program code configured to, with the at least one processor, cause the central unit further to perform:
- providing a TRP modification request to the network node controlling the source assisting cell to indicate preparation of a change in the serving cell and/or
- informing a network node controlling the source assisting cell about a switch of the serving network node.

15. A system comprising a target network node (100) according to one of the claims 1 to 8, a source network node (200) according to claime 9 and a user equipment (400) according to one of the claims 10 or 11, wherein the source network node and/or the target network node is a gNB, respectively, and/or the source cell and/or the target cell a distributed unit controlled by a central unit (500) according to one of the claims 12 to 14, respectively.

## Patentansprüche

1. Zielnetzwerkknoten (100) eines mobilen Kommunikationsnetzwerks, der mindestens einen Prozessor und mindestens einen Speicher umfasst, der Computerprogrammcode beinhaltet; wobei der mindestens eine Speicher und der Computerprogrammcode dazu ausgelegt sind, den Zielnetzwerkknoten mit dem mindestens einen Prozessor zu veranlassen, mindestens Folgendes durchzuführen:
- Empfangen von Identifikationsinformationen einer bestimmten assistierenden Zielzelle von einer Zentraleinheit (500);
oder
- Erhalten von Identifikationsinformationen einer assistierenden Quellzelle (300), die einer bedienenden Quellzelle einer Teilnehmereinrichtung (400) bei einer Quelloperation mit mehreren Übertragungs- und Empfangspunkten (mTRP) assistiert, von einem Quellnetzwerkknoten (200) oder von einer Zentraleinheit des Zielnetzwerkknotens, und
- Bestimmen einer assistierenden Zielzelle auf Basis der erhaltenen Identifikationsinformationen durch Folgendes
- Priorisieren einer Auswahl der assistierenden Quellzelle als die assistierende Zielzelle gegenüber einer oder mehreren alternativen assistierenden Zielzellen und/oder
- Auswählen der assistierenden Quellzelle als die assistierende Zielzelle;
nachdem das Empfangen oder das Erhalten und das Bestimmen durchgeführt wurden:
- Senden einer mTRP-Zielauslegung, die eine Zellauslegung der bestimmten assistierenden Zielzelle umfasst, an den Quellnetzwerkknoten (200), der die bedienende Quellzelle bereitstellt; und
- Werden des bedienenden Netzwerkknotens für die Teilnehmereinrichtung (400) in einer mTRP-Zieloperation auf Basis der bestimmten assistierenden Zielzelle, während eine Benutzerdatenübertragung zwischen der Teilnehmereinrichtung und der assistierenden Quellzelle nicht unterbrochen ist,
wobei die bestimmte assistierende Zielzelle dem Zielnetzwerkknoten bei der mTRP-Zieloperation assistiert.

2. Zielnetzwerkknoten (100) nach dem vorhergehenden Anspruch, wobei
- die übertragene mTRP-Zielauslegung in einem Übergabebefehl umfasst ist, der die Teilnehmereinrichtung zu Folgendem anweist
- Getrenntwerden vom Quellnetzwerkknoten, und
- Verbundenwerden bei der mTRP-Zieloperation mit dem Zielnetzwerkknoten, während die Benutzerdatenübertragung zwischen der Teilnehmereinrichtung und der assistierenden Quellzelle nicht unterbrochen ist.

3. Zielnetzwerkknoten (100) nach einem der vorhergehenden Ansprüche, wobei
- die Identifikationsinformationen Teil einer Übergabevorbereitungsanforderung sind und/oder von derselben begleitet werden; und/oder
- die Identifikationsinformationen von einem Erhalten von mindestens einem Teil einer Zellauslegung der assistierenden Quellzelle und/oder einer mTRP-Auslegung der assistierenden Quellzelle begleitet werden.

4. Zielnetzwerkknoten (100) nach einem der vorhergehenden Ansprüche, wobei
- das Erhalten mindestens teilweise via eine Xn-Signalisierung implementiert wird.

5. Zielnetzwerkknoten (100) nach einem der vorhergehenden Ansprüche, wobei der mindestens eine Speicher und der Computerprogrammcode dazu ausgelegt sind, den Zielnetzwerkknoten mit dem mindestens einen Prozessor zu veranlassen, ferner Folgendes durchzuführen:
- Übertragen einer Übertragungs- und Empfangspunkt(TRP)-Hinzufügungsanforderung zum Netzwerkknoten, der die assistierende Zielzelle auf Basis der erhaltenen Identifikationsinformationen bereitstellt und/oder steuert.

6. Zielnetzwerkknoten (100) nach einem der vorhergehenden Ansprüche, der mindestens eine Speicher und der Computerprogrammcode dazu ausgelegt sind, den Zielnetzwerkknoten mit dem mindestens einen Prozessor zu veranlassen, ferner Folgendes durchzuführen:
- Auslegen des Zielnetzwerkknotens zum Bereitstellen einer verteilten Einheit und Auswählen der assistierenden Quellzelle als die assistierende Zielzelle auf Basis der erhaltenen Identifikationsinformationen, vorausgesetzt, eine Messung der assistierenden Quellzelle, die vom und/oder durch den Quellnetzwerkknoten empfangen wird, über einem vordefinierten Schwellwert liegt, und/oder
- Bereitstellen einer Zielauslegung für mehrere Übertragungs- und Empfangspunkte, mTRP, für den Quellnetzwerkknoten, wobei die mTRP-Zielauslegung eine Zellauslegung einer bedienenden Zielzelle und/oder eine Zellauslegung einer assistierenden Zielzelle umfasst, und/oder
- Bereitstellen einer mTRP-Zielauslegung via den Quellnetzwerkknoten für die Teilnehmereinrichtung, wobei die mTRP-Zielauslegung eine Zellauslegung einer bedienenden Zielzelle und/oder eine Zellauslegung einer assistierenden Zielzelle umfasst.

7. Zielnetzwerkknoten (100) nach einem der vorhergehenden Ansprüche, wobei der mindestens eine Speicher und der Computerprogrammcode dazu ausgelegt sind, den Zielnetzwerkknoten mit dem mindestens einen Prozessor zu veranlassen, ferner Folgendes durchzuführen:
- Informieren eines Netzwerkknotens, der die assistierende Quellzelle steuert, über eine Umschaltung des bedienenden Netzwerkknotens der Teilnehmereinrichtung vom Quellnetzwerkknoten auf den Zielnetzwerkknoten.

8. Zielnetzwerkknoten (100) nach einem der vorhergehenden Ansprüche, wobei der mindestens eine Speicher und der Computerprogrammcode dazu ausgelegt sind, den Zielnetzwerkknoten mit dem mindestens einen Prozessor zu veranlassen, ferner Folgendes durchzuführen:
- Ändern der assistierenden Zielzelle der mTRP-Zieloperation, nachdem der Zielnetzwerkknoten der bedienenden Netzwerkknoten der Teilnehmereinrichtung geworden ist, was das Auswählen einer anderen assistierenden Zielzelle umfasst, um der mTRP-Zieloperation zu assistieren, nachdem der Zielnetzwerkknoten der bedienende Netzwerkknoten der Teilnehmereinrichtung geworden ist.

9. Quellnetzwerkknoten (200) eines mobilen Kommunikationsnetzwerks, der mindestens einen Prozessor und mindestens einen Speicher umfasst, der Computerprogrammcode beinhaltet; wobei der mindestens eine Speicher und der Computerprogrammcode dazu ausgelegt sind, den Quellnetzwerkknoten mit dem mindestens einen Prozessor zu veranlassen, mindestens Folgendes durchzuführen:
- Bereitstellen einer bedienenden Quellzelle für eine Teilnehmereinrichtung (400) in einer mTRP-Quelloperation;
- Bereitstellen von Identifikationsinformationen einer assistierenden Quellzelle der mTRP-Quelloperation für einen Zielnetzwerkknoten (100) oder eine Zentraleinheit (500) eines Zielnetzwerkknotens;
- Erhalten einer mTRP-Zielauslegung, die eine Zellauslegung einer assistierenden Zielzelle umfasst, die mindestens Informationen über eine assistierende Zielzelle für eine mTRP-Zieloperation umfasst, vom Zielnetzwerkknoten und/oder von der Zentraleinheit des Quellnetzwerkknotens;
- wobei die assistierende Zielzelle vom Zielnetzwerkknoten oder von der Zentraleinheit auf Basis der Identifikationsinformationen der assistierenden Quellzelle durch Folgendes bestimmt wird
- Priorisieren der assistierenden Quellzelle als die assistierende Zielzelle gegenüber einer oder mehreren alternativen assistierenden Zielzellen und/oder
- Auswählen der assistierenden Quellzelle als die assistierende Zielzelle;
wobei die assistierende Zielzelle dem Zielnetzwerkknoten bei einer mTRP-Zieloperation assistiert;
- Übertragen eines Übergabebefehls, der die mTRP-Zielauslegung umfasst, die die Zellauslegung der assistierenden Zielzelle umfasst, zur Teilnehmereinrichtung (400), wobei
- der übertragene Übergabebefehl die Teilnehmereinrichtung zu Folgendem anweist
- Getrenntwerden vom Quellnetzwerkknoten, und
- Verbundenwerden bei der mTRP-Zieloperation mit dem Zielnetzwerkknoten, während eine Benutzerdatenübertragung zwischen der Teilnehmereinrichtung und der assistierenden Quellzelle nicht unterbrochen ist.

10. Teilnehmereinrichtung, UE, (400) die mindestens einen Prozessor und mindestens einen Speicher umfasst, der Computerprogrammcode beinhaltet; wobei der mindestens eine Speicher und der Computerprogrammcode dazu ausgelegt sind, die UE mit dem mindestens einen Prozessor zu veranlassen, mindestens Folgendes durchzuführen:
- Erhalten eines Übergabebefehls, der eine mTRP-Zielauslegung umfasst, die eine Zellauslegung einer assistierenden Zielzelle umfasst, von einem Quellnetzwerkknoten (200), wobei der Quellnetzwerkknoten die Teilnehmereinrichtung in einer mTRP-Quelloperation bedient, die von einer assistierenden Quellzelle assistiert wird, wobei der Übergabebefehl und/oder die mTRP-Zielauslegung die Teilnehmereinrichtung zu Folgendem veranlasst
- Getrenntwerden vom Quellnetzwerkknoten, und
- Verbundenwerden bei einer mTRP-Zieloperation mit einem Zielnetzwerkknoten, während eine Benutzerdatenübertragung zwischen der UE und der assistierenden Quellzelle nicht unterbrochen ist.

11. Teilnehmereinrichtung (400) nach Anspruch 10, wobei der mindestens eine Speicher und der Computerprogrammcode dazu ausgelegt sind, die Teilnehmereinrichtung mit dem mindestens einen Prozessor ferner zu veranlassen, Folgendes durchzuführen:
- Getrenntwerden vom Quellnetzwerkknoten (200), und
- Verbundenwerden bei einer mTRP-Zieloperation mit dem Zielnetzwerkknoten (100) als ein bedienender Netzwerkknoten, während die Benutzerdatenübertragung zwischen der UE und der assistierenden Quellzelle nicht unterbrochen ist, wobei die mTRP-Zieloperation von der assistierenden Quellzelle als die assistierende Zielzelle assistiert wird.

12. Zentraleinheit (500) eines mobilen Kommunikationsnetzwerks, die mindestens einen Prozessor; und mindestens einen Speicher umfasst, der Computerprogrammcode beinhaltet; wobei der mindestens eine Speicher und der Computerprogrammcode dazu ausgelegt sind, die Zentraleinheit mit dem mindestens einen Prozessor zu veranlassen, mindestens Folgendes durchzuführen:
- Empfangen von Identifikationsinformationen einer assistierenden Quellzelle von einem Quellnetzwerkknoten (200),
- Bestimmen einer assistierenden Zielzelle durch Folgendes
- Priorisieren einer Auswahl der assistierenden Quellzelle als die assistierende Zielzelle und/oder
- Auswählen der assistierenden Quellzelle als die assistierende Zielzelle,
wobei die assistierende Zielzelle einem Zielnetzwerkknoten bei einer mTRP-Zieloperation assistiert; und
- Bereitstellen von Identifikationsinformationen der bestimmten assistierenden Zielzelle für den Zielnetzwerkknoten;
- Bereitstellen eines Übergabebefehls, der eine mTRP-Zielauslegung umfasst, die eine Zellauslegung einer assistierenden Zielzelle umfasst, für die Teilnehmereinrichtung (400) via den Quellnetzwerkknoten (200), wobei der Übergabebefehl die Teilnehmereinrichtung zu Folgendem anweist
- Getrenntwerden vom Quellnetzwerkknoten, und
- Verbundenwerden bei der mTRP-Zieloperation mit dem Zielnetzwerkknoten, während eine Benutzerdatenübertragung zwischen der Teilnehmereinrichtung und der assistierenden Quellzelle nicht unterbrochen ist.

13. Zentraleinheit (500) nach Anspruch 12, wobei der mindestens eine Speicher und der Computerprogrammcode dazu ausgelegt sind, die Zentraleinheit mit dem mindestens einen Prozessor ferner zu veranlassen, Folgendes durchzuführen:
- Anzeigen des Beibehaltens der assistierenden Quellzelle als die assistierende Zielzelle für den Zielnetzwerkknoten (100), um zu vermeiden, dass der Zielnetzwerkknoten die assistierende Quellzelle zum Assistieren der mTRP-Zieloperation zurückweist.

14. Zentraleinheit (500) nach einem der Ansprüche 12 bis 13, wobei der mindestens eine Speicher und der Computerprogrammcode dazu ausgelegt sind, die Zentraleinheit mit dem mindestens einen Prozessor ferner zu veranlassen, Folgendes durchzuführen:
- Bereitstellen einer mTRP-Modifikationsanforderung für den Netzwerkknoten, der die assistierende Quellzelle steuert, um eine Vorbereitung einer Änderung in der bedienenden Zelle anzuzeigen, und/oder
- Informieren eines Netzwerkknotens, der die assistierende Quellzelle steuert, über eine Umschaltung des bedienenden Netzwerkknotens.

15. System, das einen Zielnetzwerkknoten (100) nach einem der Ansprüche 1 bis 8, einen Quellnetzwerkknoten (200) nach Anspruch 9 und eine Teilnehmereinrichtung (400) nach einem der Ansprüche 10 oder 11 umfasst, wobei der Quellnetzwerkknoten bzw. der Zielnetzwerkknoten ein gNB ist und/oder die Quellzelle bzw. die Zielzelle eine verteilte Einheit, die jeweils von einer Zentraleinheit (500) nach einem der Ansprüche 12 bis 14 gesteuert wird.

## Revendications

1. Nœud de réseau cible (100) d'un réseau de communication mobile, comprenant au moins un processeur ; et au moins une mémoire comportant un code de programme informatique ; l'au moins une mémoire et le code de programme informatique étant configurés pour, avec l'au moins un processeur, amener le nœud de réseau cible à effectuer au moins ce qui suit :
- recevoir d'une unité centrale (500) des informations d'identification d'une cellule d'assistance cible déterminée ; ou
- obtenir à partir d'un nœud de réseau source (200) ou à partir d'une unité centrale du nœud de réseau cible, des informations d'identification d'une cellule d'assistance source (300) assistant une cellule de desserte source d'un équipement utilisateur (400) dans une opération de points de transmission et de réception multiples (mTRP) source, et
- déterminer une cellule d'assistance cible sur la base des informations d'identification obtenues
- en priorisant une sélection de la cellule d'assistance source en tant que cellule d'assistance cible sur une ou plusieurs cellules d'assistance cibles alternatives et/ou
- en sélectionnant la cellule d'assistance source en tant que cellule d'assistance cible ;
après la réalisation de la réception ou de l'obtention et de la détermination :
- envoyer une configuration mTRP cible comprenant une configuration de cellule de la cellule d'assistance cible déterminée au nœud de réseau source (200) fournissant la cellule de desserte source ; et
- devenir le nœud de réseau de desserte de l'équipement utilisateur (400) dans une opération mTRP cible sur la base de la cellule d'assistance cible déterminée, tandis qu'une transmission de données d'utilisateur entre l'équipement utilisateur et la cellule d'assistance source est ininterrompue,
dans lequel la cellule d'assistance cible déterminée assiste le nœud de réseau cible dans l'opération mTRP cible.

2. Nœud de réseau cible (100) selon la revendication précédente, dans lequel
- la configuration mTRP cible transmise est comprise dans une instruction de transfert intercellulaire qui ordonne à l'équipement utilisateur de
- se déconnecter du nœud de réseau source, et
- se connecter au nœud de réseau cible dans l'opération mTRP cible tandis que la transmission de données d'utilisateur entre l'équipement utilisateur et la cellule d'assistance source est ininterrompue.

3. Nœud de réseau cible (100) selon l'une des revendications précédentes, dans lequel
- les informations d'identification font partie et/ou sont accompagnées d'une demande de préparation de transfert intercellulaire ; et/ou
- les informations d'identification accompagnent l'obtention d'au moins une partie d'une configuration de cellule de la cellule d'assistance source et/ou d'une configuration mTRP de la cellule d'assistance source.

4. Nœud de réseau cible (100) selon l'une des revendications précédentes, dans lequel
- l'obtention est au moins partiellement mise en œuvre via une signalisation Xn.

5. Nœud de réseau cible (100) selon l'une des revendications précédentes, où l'au moins une mémoire et le code de programme informatique sont configurés pour, avec l'au moins un processeur, amener le nœud de réseau cible en outre à effectuer ce qui suit :
- transmettre une demande d'ajout de point de transmission et de réception, TRP, au nœud de réseau fournissant et/ou commandant la cellule d'assistance cible sur la base des informations d'identification obtenues.

6. Nœud de réseau cible (100) selon l'une des revendications précédentes, l'au moins une mémoire et le code de programme informatique sont configurés pour, avec l'au moins un processeur, amener le nœud de réseau cible en outre à effectuer ce qui suit :
- configurer le nœud de réseau cible pour fournir une unité distribuée et sélectionner, sur la base des informations d'identification obtenues, la cellule d'assistance source en tant que cellule d'assistance cible, à condition qu'une mesure de la cellule d'assistance source reçue du et/ou par le nœud de réseau source soit au-dessus d'un seuil prédéfini et/ou
- fournir une configuration de points de transmission et de réception multiples, mTRP, cible au nœud de réseau source, dans lequel la configuration mTRP cible comprend une configuration de cellule d'une cellule de desserte cible et/ou une configuration de cellule d'une cellule d'assistance cible et/ou
- une configuration mTRP cible est fournie à l'équipement utilisateur via le nœud de réseau source, dans lequel la configuration mTRP cible comprend une configuration de cellule d'une cellule de desserte cible et/ou une configuration de cellule d'une cellule d'assistance cible.

7. Nœud de réseau cible (100) selon l'une des revendications précédentes, dans lequel l'au moins une mémoire et le code de programme informatique sont configurés pour, avec l'au moins un processeur, amener le nœud de réseau cible en outre à effectuer ce qui suit :
- informer un nœud de réseau commandant la cellule d'assistance source d'un passage du nœud de réseau de desserte de l'équipement utilisateur du nœud de réseau source au nœud de réseau cible.

8. Nœud de réseau cible (100) selon l'une des revendications précédentes, dans lequel l'au moins une mémoire et le code de programme informatique sont configurés pour, avec l'au moins un processeur, amener le nœud de réseau cible en outre à effectuer ce qui suit :
- changer la cellule d'assistance cible de l'opération mTRP cible après que le nœud de réseau cible est devenu le nœud de réseau de desserte de l'équipement utilisateur, ce qui comprend la sélection d'une cellule d'assistance cible différente pour assister l'opération mTRP cible après que le nœud de réseau cible est devenu le nœud de réseau de desserte de l'équipement utilisateur.

9. Nœud de réseau source (200) d'un réseau de communication mobile, comprenant au moins un processeur ; et au moins une mémoire comportant un code de programme informatique ; l'au moins une mémoire et le code de programme informatique étant configurés pour, avec l'au moins un processeur, amener le nœud de réseau source à effectuer au moins ce qui suit :
- fournir une cellule de desserte source à un équipement utilisateur (400) dans une opération mTRP source ;
- fournir à un nœud de réseau cible (100) ou à une unité centrale (500) d'un nœud de réseau cible des informations d'identification d'une cellule d'assistance source de l'opération mTRP source ;
- obtenir à partir du nœud de réseau cible et/ou à partir de l'unité centrale du nœud de réseau source une configuration mTRP cible comprenant une configuration de cellule d'une cellule d'assistance cible comprenant au moins des informations d'une cellule d'assistance cible pour une opération mTRP cible ;
- dans lequel la cellule d'assistance cible est déterminée par le nœud de réseau cible ou par l'unité centrale sur la base des informations d'identification de la cellule d'assistance source
- en priorisant la cellule d'assistance source en tant que cellule d'assistance cible sur une ou plusieurs cellules d'assistance cibles alternatives et/ou
- en sélectionnant la cellule d'assistance source en tant que cellule d'assistance cible ;
dans lequel la cellule d'assistance cible assiste le nœud de réseau cible dans une opération mTRP cible ;
- transmettre une instruction de transfert intercellulaire comprenant la configuration mTRP cible comprenant la configuration de cellule d'une cellule d'assistance cible à l'équipement utilisateur (400), dans lequel
- l'instruction de transfert intercellulaire transmise ordonne à l'équipement utilisateur de
- se déconnecter du nœud de réseau source, et
- se connecter au nœud de réseau cible dans l'opération mTRP cible tandis qu'une transmission de données d'utilisateur entre l'équipement utilisateur et la cellule d'assistance source est ininterrompue.

10. Équipement utilisateur, UE, (400) comprenant au moins un processeur ; et au moins une mémoire comportant un code de programme informatique ; l'au moins une mémoire et le code de programme informatique étant configurés pour, avec l'au moins un processeur, amener l'UE à effectuer au moins ce qui suit :
- obtenir une instruction de transfert intercellulaire comprenant une configuration mTRP cible comprenant une configuration de cellule d'une cellule d'assistance cible à partir d'un nœud de réseau source (200), dans lequel le nœud de réseau source dessert l'équipement utilisateur dans une opération mTRP source assistée par d'une cellule d'assistance source, dans lequel l'instruction de transfert intercellulaire et/ou la configuration mTRP cible amènent l'équipement utilisateur à
- se déconnecter du nœud de réseau source, et
- se connecter à un nœud de réseau cible dans une opération mTRP cible tandis qu'une transmission de données d'utilisateur entre l'UE et la cellule d'assistance source est ininterrompue.

11. Équipement utilisateur (400) selon la revendication 10, dans lequel l'au moins une mémoire et le code de programme informatique sont configurés pour, avec l'au moins un processeur, amener l'équipement utilisateur en outre à effectuer ce qui suit :
- de se déconnecter du nœud de réseau source (200), et
- se connecter au nœud de réseau cible (100) en tant que nœud de réseau de desserte dans l'opération mTRP cible tandis que la transmission de données d'utilisateur entre l'UE et la cellule d'assistance source est ininterrompue, dans lequel l'opération mTRP cible est assistée par la cellule d'assistance source en tant que cellule d'assistance cible.

12. Unité centrale (500) d'un réseau de communication mobile, comprenant au moins un processeur ; et au moins une mémoire comportant un code de programme informatique ; l'au moins une mémoire et le code de programme informatique étant configurés pour, avec l'au moins un processeur, amener l'unité centrale à effectuer au moins ce qui suit :
- recevoir des informations d'identification d'une cellule d'assistance source à partir d'un nœud de réseau source (200),
- déterminer une cellule d'assistance cible
- en priorisant une sélection de la cellule d'assistance source en tant que cellule d'assistance cible et/ou
- en sélectionnant la cellule d'assistance source en tant que cellule d'assistance cible,
dans laquelle la cellule d'assistance cible assiste un nœud de réseau cible dans une opération mTRP cible ; et
- fournir des informations d'identification de la cellule d'assistance cible déterminée au nœud de réseau cible ;
- fournir à l'équipement utilisateur (400) une instruction de transfert intercellulaire comprenant une configuration mTRP cible comprenant une configuration de cellule d'une cellule d'assistance cible via le nœud de réseau source (200), dans laquelle l'instruction de transfert intercellulaire ordonne à l'équipement utilisateur de
- se déconnecter du nœud de réseau source, et
- se connecter au nœud de réseau cible dans l'opération mTRP cible tandis qu'une transmission de données d'utilisateur entre l'équipement utilisateur et la cellule d'assistance source est ininterrompue.

13. Unité centrale (500) selon la revendication 12, où l'au moins une mémoire et le code de programme informatique sont configurés pour, avec l'au moins un processeur, amener l'unité centrale en outre à effectuer ce qui suit :
- indiquer au nœud de réseau cible (100) la retenue de la cellule d'assistance source en tant que cellule d'assistance cible afin d'éviter que le nœud de réseau cible ne rejette la cellule d'assistance source pour assister l'opération mTRP cible.

14. Unité centrale (500) selon l'une des revendications 12 et 13, dans laquelle l'au moins une mémoire et le code de programme informatique sont configurés pour, avec l'au moins un processeur, amener l'unité centrale en outre à effectuer ce qui suit :
- fournir une demande de modification TRP au nœud de réseau commandant la cellule d'assistance source pour indiquer une préparation d'un changement dans la cellule de desserte et/ou
- informer un nœud de réseau commandant la cellule d'assistance source d'une commutation du nœud de réseau de desserte.

15. Système comprenant un nœud de réseau cible (100) selon l'une des revendications 1 à 8,
un nœud de réseau source (200) selon la revendication 9 et un équipement utilisateur (400) selon l'une des revendications 10 ou 11, dans lequel le nœud de réseau source et/ou le nœud de réseau cible est un gNB, respectivement, et/ou la cellule source et/ou la cellule cible une unité distribuée commandée par une unité centrale (500) selon l'une des revendications 12 à 14, respectivement.
